# EUROPEAN PATENT SPECIFICATION

(11) **EP 3 595 477 B1**
(45) Date of publication and mention of the grant of the patent: **06.10.2021**
(21) Application number: 17713853.4
(22) Date of filing: 16.03.2017
(51) Int. Cl.: A43B 13/18, B29D 35/14

(54) **METHOD OF MAKING A SOLE STRUCTURE FOR AN ARTICLE OF FOOTWEAR**
VERFAHREN ZUR HERSTELLUNG EINER SCHUHSOHLESTRUKTUR
PROCEDE DE FABRICATION D'UNE STRUCTURE DE SEMELLE POUR UN ARTICLE DE CHAUSSURE

(43) Date of publication of application: 22.01.2020
(73) Proprietor: NIKE Innovate C.V., Beaverton, OR 97005 (US)
(72) Inventor: HURD, John, Beaverton, Oregon 97005 (US); GREENSPAN, Joel R., Beaverton, Oregon 97005 (US); LEVY, Cassidy R., Beaverton, Oregon 97005 (US); LONG, Nicholas R., Beaverton, Oregon 97005 (US); MINAMI, Tetsuya T., Beaverton, Oregon 97005 (US); FU, Howard, Beaverton, Oregon 97005 (US); HOLT, Scott C., Beaverton, Oregon 97005 (US)
(74) Representative: Müller-Boré & Partner Patentanwälte PartG mbB
(86) International application number: PCT/US2017/022647
(87) International publication number: WO 2018/169535

(56) References cited:
- EP-A1- 2 609 824
- DE-A1-102010 046 278
- DE-U1-202016 104 626
- US-A1- 2005 150 132
- US-A1- 2007 051 018
- US-A1- 2007 169 379
- US-A1- 2016 073 732
- US-A1- 2017 055 636

## Description

The present disclosure relates to a method of making a sole structure for an article of footwear comprising cushioning members incorporating particulate matter.

This section provides background information related to the present disclosure which is not necessarily prior art.

Articles of footwear conventionally include an upper and a sole structure. The upper may be formed from any suitable material(s) to receive, secure, and support a foot on the sole structure. The upper may cooperate with laces, straps, or other fasteners to adjust the fit of the upper around the foot. A bottom portion of the upper, proximate to a bottom surface of the foot, attaches to the sole structure.

Sole structures generally include a layered arrangement extending between a ground surface and the upper. One layer of the sole structure includes an outsole that provides abrasion-resistance and traction with the ground surface. The outsole may be formed from rubber or other materials that impart durability and wear-resistance, as well as enhance traction with the ground surface. Another layer of the sole structure includes a midsole disposed between the outsole and the upper. The midsole provides cushioning for the foot and is generally at least partially formed from a polymer foam material that compresses resiliently under an applied load to cushion the foot by attenuating ground-reaction forces. The midsole may define a bottom surface on one side that opposes the outsole and a footbed on the opposite side that may be contoured to conform to a profile of the bottom surface of the foot. Sole structures may also include a comfort-enhancing insole or a sockliner located within a void proximate to the bottom portion of the upper.

Midsoles using polymer foam materials are generally configured as a single slab that compresses resiliently under applied loads, such as during walking or running movements. Generally, single-slab polymer foams are designed with an emphasis on balancing cushioning characteristics that relate to softness and responsiveness as the slab compresses under gradient loads. Polymer foams providing cushioning that is too soft will decrease the compressibility and the ability of the midsole to attenuate ground-reaction forces after repeated compressions. Conversely, polymer foams that are too hard and, thus, very responsive, sacrifice softness, thereby resulting in a loss in comfort. While different regions of a slab of polymer foam may vary in density, hardness, energy return, and material selection to balance the softness and responsiveness of the slab as a whole, creating a single slab of polymer foam that loads in a gradient manner from soft to responsive is difficult to achieve.
DE 10 2010 046278 A1 describes a shoe which has a sole part comprising a sole lower part that extends over a base portion, hollow spaces filled with bulk materials, and a cover permanently connected to an upper side of the sole lower part. US 2005/150132 A1 describes footwear with expanded thermoplastic beads in the foodbed.
FIG. 1 is a perspective view of an article of footwear in accordance with the principles of the present disclosure;
FIG. 2 is an exploded view of the article of footwear of FIG. 2;
FIG. 3 is a cross-sectional view of a cushioning member of the article of footwear of FIG. 1 taken along Line 3-3 of FIG. 2;
FIG. 4 is a cross-sectional view of a tool for use in forming the cushioning of FIG. 3;
FIG. 5 is a cross-sectional view of the tool of FIG. 4 showing a sheet of material formed into a barrier member of the cushioning member of FIG. 3;
FIG. 6 is a cross-sectional view of the tool of FIG. 4 and the barrier member of FIG. 5 showing the barrier member receiving quantities of particulate matter;
FIG. 7 is a cross-sectional view of the tool of FIG. 4 showing the barrier member of FIG. 5 being secured to another barrier member;
FIG. 8 is a cross-sectional view of a formed cushioning member in accordance with the principals of the present disclosure;
FIG. 9 is a perspective view of the cushioning member of FIG. 8;
FIG. 10 is a cross-sectional view of a tool for use in forming the cushioning member of FIG. 3 with halves of the tool open and receiving a sheet of material;
FIG. 11 is a cross-sectional view of the tool of FIG. 10 shown in a closed state and forming the sheet of material into a partially formed barrier member of the cushioning member;
FIG. 12 is a cross-sectional view of the partially formed barrier member of FIG. 11;
FIG. 13 is an exploded view of another barrier member shown in conjunction with a sheet of adhesive material and a blocking member;
FIG. 14 is a cross-sectional view of a tool for use in joining the barrier member of FIG. 12 to the other barrier member of FIG. 13;
FIG. 15 is a cross-sectional view of a partially formed, prefilled cushioning member;
FIG. 16 is a cross-sectional view of a die-cutting tool used to form the partially formed, pre-filled cushioning member of FIG. 15 into a desired shape;
FIG. 17 is a top view of the pre-filled cushioning member of FIG. 15 showing ports that receive an injection nozzle;
FIG. 18 is a top view of the pre-filled cushioning member of FIG. 15 showing the ports of FIG. 17 receiving respective nozzles of a filling device;
FIG. 19 is a top view of the pre-filled cushioning member of FIG. 15 showing the nozzles of FIG. 18 inserting particulate matter into chambers of the pre-filled cushioning member;
FIG. 20 is a top view of a cushioning member filed with particulate matter and being sealed via a welding process;
FIG. 21 is a cross-sectional view of the filled cushioning member of FIG. 20;
FIG. 22 is a perspective view of the cushioning member of FIG. 21; and
FIG. 23 is a cross-sectional view of a sole structure incorporating the cushioning member of FIG. 22.

Corresponding reference numerals indicate corresponding parts throughout the drawings.

According to the present invention, there is provided a method of making a sole structure for an article of footwear. The method includes providing a midsole with a first cavity and a second cavity. A first barrier member is formed from a first material and includes a first compartment and a second compartment and a second barrier member is formed from a second material. The method also includes providing the first compartment with a first quantity of particulate matter, providing the second compartment with a second quantity of particulate matter, and covering the first compartment with the second barrier member. The method further includes covering the second compartment with the second barrier member, positioning the first compartment within the first cavity, and positioning the second compartment within the second cavity. According to the present invention, providing the first compartment with the first quantity of particulate matter and providing the second compartment with the second quantity of particulate matter includes providing the first compartment and the second compartment with foam beads.

Implementations of the disclosure may include one or more of the following optional features. In some implementations, forming the first barrier member from the first material includes forming the first barrier member from a different material than the second material. Forming the first barrier member may include forming a sheet of the first material into a shape defining the first compartment and the second compartment. Forming the first barrier member from the first material may also include forming the first barrier member from a polymer. Forming the first barrier member from the first material may further include forming the first barrier member from thermoplastic polyurethane (TPU). In some examples, forming the second barrier member from the second material includes forming the second barrier member from spandex.

In some implementations, providing the first compartment with the first quantity of particulate matter includes providing the first compartment with a quantity of particulate matter that is approximately the same as the second quantity of particulate matter. Alternatively, providing the first compartment with the first quantity of particulate matter may include providing the first compartment with a quantity of particulate matter that is different than the second quantity of particulate matter. According to the present invention, providing the first compartment with the first quantity of particulate matter and providing the second compartment with the second quantity of particulate matter includes providing the first compartment and the second compartment with foam beads.

In some examples, providing the first compartment and the second compartment with foam beads includes providing foam beads having a substantially spherical shape. Further, providing the first compartment and the second compartment with foam beads may include providing foam beads having approximately the same size and shape. Providing the first compartment and the second compartment with foam beads may alternatively include providing foam beads having a different size and shape.

In some implementations, forming the first barrier member from the first material and forming the second barrier member from the second material includes forming one of the first barrier member and the second barrier member from a permeable material and forming the other of the first barrier member and the second barrier member from an impermeable material. For example, forming the first barrier member from the first material and forming the second barrier member from the second material may include forming the first barrier member from an impermeable material and forming the second barrier member from a permeable material. Providing the first compartment with the first quantity of particulate matter and providing the second compartment with the second quantity of particulate matter may occur before the first compartment and the second compartment are coved by the second barrier member. Alternatively, and in some examples, providing the first compartment with the first quantity of particulate matter and providing the second compartment with the second quantity of particulate matter occurs after the first compartment and the second compartment are coved by the second barrier member.

In some examples, the method includes attaching the second barrier member to the first barrier member. Attaching the second barrier member to the first barrier member may include attaching the second barrier member to the first barrier member at a first attachment location that surrounds the first compartment and may include attaching the second barrier member to the first barrier member at a second attachment location that surrounds the second compartment. Attaching the second barrier member to the first barrier member may also include attaching the second barrier member to the first barrier member via an adhesive. Attaching the second barrier member to the first barrier member via an adhesive may include attaching the second barrier member to the first barrier member via a hot melt adhesive. Forming the first barrier member from the first material may include applying heat and a vacuum to a sheet of the first material. Forming the first barrier member from the first material could alternatively include compression molding a sheet of the first material within a die.

In some implementations, providing the first compartment with the first quantity of particulate matter and providing the second compartment with the second quantity of particulate matter includes injecting the first quantity of particulate matter between the first barrier member and the second barrier member at a first port in fluid communication with the first compartment. The method may also include injecting the second quantity of particulate matter between the first barrier member and the second barrier member at a second port in fluid communication with the second compartment. The method may further include sealing the first port and the second port after injection of the first quantity of particulate matter into the first compartment and after injection of the second quantity of particulate matter into the second compartment. Sealing the first port and the second port may include attaching the first barrier member to the second barrier member using radio frequency (RF) welding. Finally, providing the midsole may include forming the midsole from a foamed polymer material.

The method of the present invention may further comprise providing an outsole and a cushioning member. The midsole further includes a first aperture formed in a first surface of the midsole and in fluid communication with the first cavity, and a second aperture formed in a second surface of the midsole and in fluid communication with the first cavity. The second surface is disposed on an opposite side of the midsole than the first surface and opposes the outsole. The cushioning member includes a first compartment containing a first quantity of particulate matter within the first cavity, whereby the first quantity of particulate matter is visible through the second aperture at the outsole.

This aspect may include one or more of the following optional features. In some implementations, positioning the cushioning member within the first cavity includes positioning a cushioning member having a first barrier member and a second barrier member that cooperate to contain the first quantity of particulate matter within the first compartment. The method also includes shaping the first barrier member to define the first compartment and attaching the second barrier member to the first barrier member. In some examples, the method includes locating an adhesive between the first barrier member and the second barrier member. Locating the adhesive between the first barrier member and the second barrier member may include surrounding the first compartment with the adhesive. Locating the adhesive between the first barrier member and the second barrier member may include locating a hot melt adhesive.

In some examples, the method includes tapering the first compartment in a direction away from the second barrier member. The method may also include covering the first compartment with the second barrier member to define a first interior void, the first quantity of particulate matter being disposed within the first interior void. The method may further include forming the first barrier member from a first material and forming the second barrier member from a second material different than the first material. Forming the first barrier member from a first material may include forming the first barrier member from a polymer. Forming the first barrier member from a first material may include forming the first barrier member from thermoplastic polyurethane (TPU). Forming the second barrier member from a second material may include forming the second barrier member from spandex.

In some examples, forming the first barrier member from a first material and forming the second barrier member from a second material includes forming one of the first material and the second material from a permeable material and the other of the first material and the second material from an impermeable material. For example, forming the first barrier member from a first material and forming the second barrier member from a second material may include forming the first material from an impermeable material and the second material from a permeable material.

According to the present invention, positioning a cushioning member including a first compartment containing a first quantity of particulate matter includes positioning a cushioning member containing foam beads. Positioning a cushioning member containing foam beads may include providing foam beads having a substantially spherical shape. Positioning a cushioning member containing foam beads may include providing foam beads having approximately the same size and shape. Alternatively, positioning a cushioning member containing foam beads may include providing foam beads having at least one of a different size and shape.

In some examples, the method includes forming the outsole from one of a transparent material and a translucent material, the first quantity of particulate matter being visible at the second aperture through the material of the outsole. The method may also include providing the midsole with a second cavity, a third aperture formed in the first surface of the midsole and in fluid communication with the second cavity, and a fourth aperture formed in the second surface of the midsole and in fluid communication with the second cavity.

The method includes providing the cushioning member with a second compartment that is received by the second cavity of the midsole and contains a second quantity of particulate matter, where the second quantity of particulate matter may be visible through the fourth aperture at the outsole. Positioning a cushioning member within the first cavity may also include positioning an outer surface of the cushioning member substantially flush with the first surface of the midsole. Positioning a cushioning member within the first cavity may further include extending an outer surface of the cushioning member from the first surface of the midsole to form at least one bulge. Forming at least one bulge may include forming the at least one bulge at the first compartment.

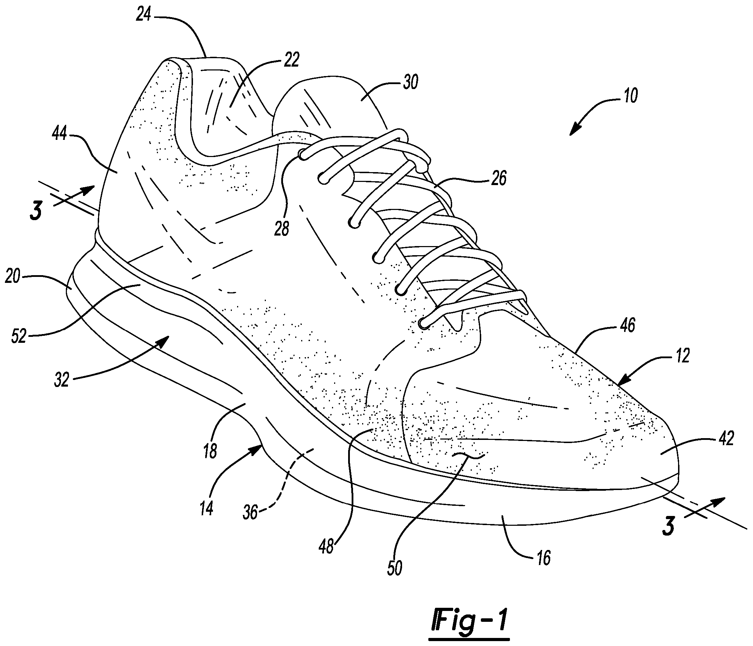

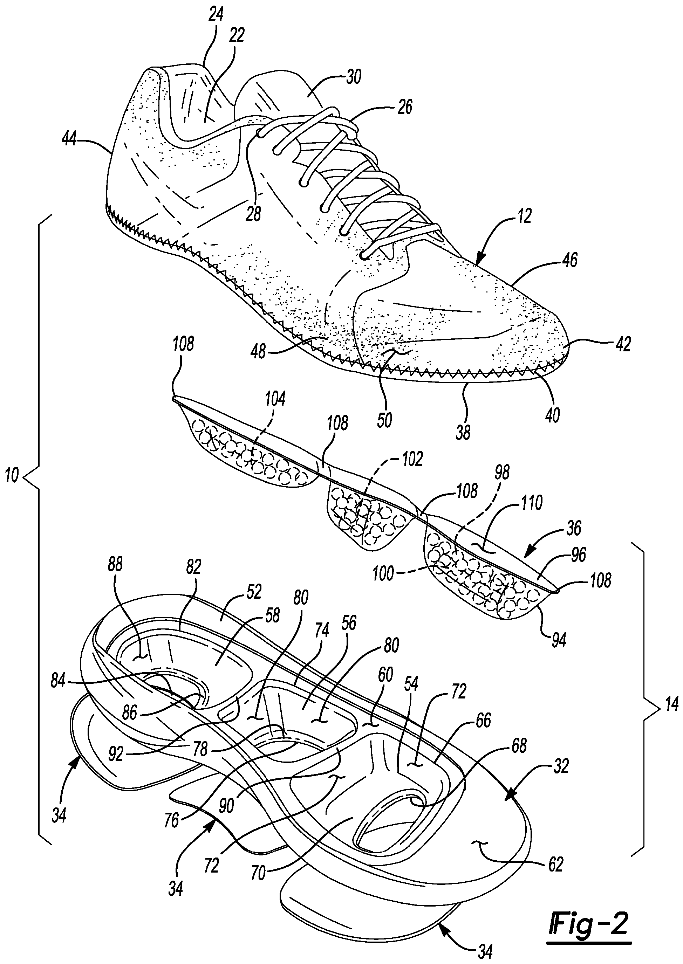

With reference to FIGS. 1 and 2, an article of footwear 10 is provided. As shown in FIG. 1, the article of footwear 10 includes an upper 12 and a sole structure 14 attached to the upper 12. The article of footwear 10 may be divided into one or more portions. The portions may include a forefoot portion 16, a midfoot portion 18, and a heel portion 20. The forefoot portion 16 may correspond with toes and joints connecting metatarsal bones with phalanx bones of a foot. The midfoot portion 18 may correspond with an arch area of the foot, and the heel portion 20 may correspond with rear portions of the foot, including a calcaneus bone.

The upper 12 includes interior surfaces that define an interior void 22 that receives and secures a foot for support on the sole structure 14. An ankle opening 24 located in the heel portion 20 may provide access to the interior void 22. For example, the ankle opening 24 may receive a foot to secure the foot within the void 22 and facilitate entry and removal of the foot from and to the interior void 22. In some examples, one or more fasteners 26 extend along the upper 12 to adjust a fit of the interior void 22 around the foot while concurrently accommodating entry and removal of the foot therefrom. The upper 12 may include apertures 28 such as eyelets and/or other engagement features such as fabric or mesh loops that receive the fasteners 26. The fasteners 26 may include laces, straps, cords, hook-and-loop, or any other suitable type of fastener.

The upper 12 may additionally include a tongue portion 30 that extends between the interior void 22 and the fasteners 26. The upper 12 may be formed from one or more materials that are stitched or adhesively bonded together to form the interior void 22. Suitable materials for the upper may include, but are not limited to, textiles, foam, leather, and synthetic leather. The materials may be selected and located to impart properties of durability, air-permeability, wear-resistance, flexibility, and comfort to the foot while disposed within the interior void 22.

With continued reference to FIGS. 1 and 2, the sole structure 14 is shown as including a midsole 32, an outsole 34, and a cushioning member 36. As shown in FIG. 2, the midsole 32 is generally disposed between the outsole 34 and the upper 12 and supports the cushioning member 36 relative to the upper 12. Namely, the midsole 32 may support the cushioning member 36 between the outsole 34 and a lower substrate 38 of the upper 12. The substrate 38 may be attached to the upper 12 via stitching 40 (FIG. 2) or, alternatively, may be integrally formed with a material of the upper 12. For example, if the upper 12 or a portion of the upper 12 is formed from a knit material, the knit material may likewise form the substrate 38 and, as such, the substrate 38 that opposes the midsole 32 and the cushioning member 36 may be integrally formed with the upper 12.

If the substrate 38 is separately formed from the upper 12, the substrate 38 may be attached to the upper 12 via stitching 40. Regardless of whether the substrate 38 is integrally formed with the upper 12 or, alternatively, is a separate component that is attached to the upper 12, the substrate 38 is disposed generally between the midsole 32 and the upper 12 and is formed from a flexible material. Forming the substrate 38 from a flexible material allows the substrate 38 to stretch and move when loaded by a user's foot during use. Allowing the substrate 38 to flex and move in response to a load received by a user's foot during use allows the user's foot to depress the midsole 32 and/or the cushioning member 36, thereby providing the user with a degree of comfort and cushioning during use of the article of footwear 10, as will be described in greater detail below.

The midsole 32 may be formed from a polymer material such as, for example, a foamed polymer material. Namely, the foamed polymer material may be ethyl-vinyl-acetate or polyurethane. Regardless of the particular construction of the midsole 32, the midsole 32 extends generally from an anterior end 42 of the upper 12 to a posterior end 44 of the upper 12. Further, the midsole 32 may extend between a medial side 46 of the upper 12 and a lateral side 48 of the upper 12. In so doing, a portion of the midsole 32 may extend onto an outer surface 50 of the upper 12 proximate to a junction of the upper 12 and the midsole 32. For example, the midsole 32 may include a projection 52 that extends at least partially around a perimeter of the midsole 32 and extends from the midsole 32 to cover a portion of the outer surface 50 of the upper 12. The projection 52 may be integrally formed with the midsole 32 when the material of the midsole is formed into the shape shown in FIG. 2.

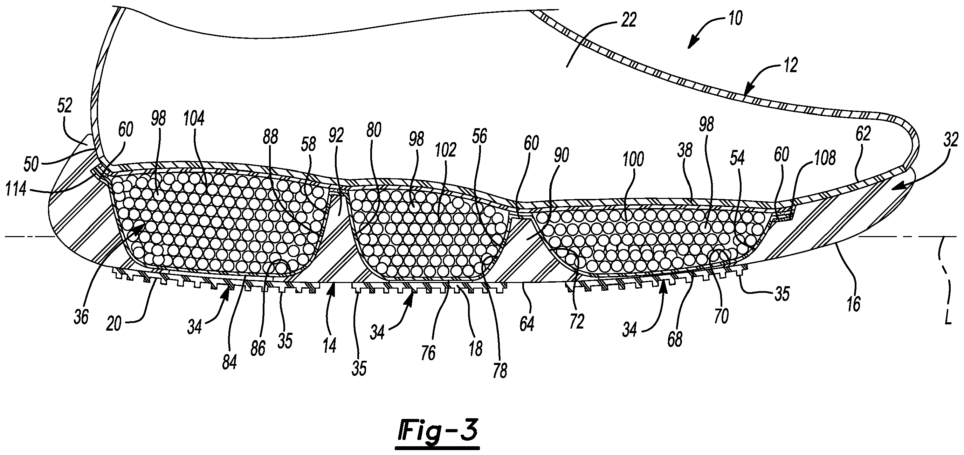

With particular reference to FIGS. 2 and 3, the midsole 32 is shown as including a first cavity 54, a second cavity 56, and a third cavity 58. As shown in FIGS. 2 and 3, the cavities 54, 56, 58 are disposed along a length of the sole structure 14 such that the first cavity 54 is disposed in the forefoot portion 16, the second cavity 56 is disposed in the midfoot portion 18, and the third cavity 58 is disposed in the heel portion 20. The cavities 54, 56, 58 are formed in a first surface 60 of the midsole 32 that opposes the substrate 38 of the upper 12. The first surface 60 is recessed from an upper surface 62 of the midsole 32 to provide clearance for a portion of the cushioning member 36 when the cushioning member 36 is disposed within the midsole 32, as will be described in greater detail below.

The midsole 32 additionally includes a second surface 64 located on an opposite side of the midsole 32 than the first surface 60. The second surface 64 opposes the outsole 34 and provides a surface to which the outsole 34 may be attached.

The cavities 54, 56, 58 are each associated with a first aperture and a second aperture of the midsole 32 that permit insertion of the cushioning member 36 into the midsole 32 and visibility of the cushioning member 36 at the outsole 34, respectively, once the cushioning member 36 is inserted into the midsole 32. Specifically, the first cavity 54 defines a first aperture 66 at a junction of the first cavity 54 and the first surface 60. The first aperture 66 defines an opening to the first cavity 54 at the first surface 60 and generally defines a shape of the first cavity 54 at the first surface 60. The first cavity 54 additionally includes a second aperture 68 disposed at an opposite end of the first cavity 54 than the first aperture 66 and formed through a bottom wall 70 of the midsole 32 within the first cavity 54. In one configuration, the bottom wall 70 and, thus, the second aperture 68 may extend in a plane that is substantially parallel to a plane defined by the first surface 60.

As described, the opening to the first cavity 54 at the first surface 60 is generally defined by the shape and size of the first aperture 66 and, further, a bottom portion of the first cavity 54 disposed at an opposite end of the first cavity 54 than the first aperture 66 is generally defined by the bottom wall 70. The first cavity 54 is further defined by a series of side surfaces 72 that extend from the bottom wall 70 to a junction of the first aperture 66 and the first surface 60 around a perimeter of the first cavity 54. Accordingly, the side surfaces 72 cooperate with one another to encircle and define a shape of the first cavity 54 between the bottom wall 70 and the first aperture 66.

The second cavity 56 is disposed generally between the first cavity 54 and the third cavity 58 along a longitudinal access (L) of the sole structure 14 (FIG. 3). The second cavity 56 includes a first aperture 74 that defines an opening to the second cavity 56 at the first surface 60. The second cavity 56 further includes a second aperture 76 disposed at an opposite end of the second cavity 56 than the first aperture 74 and formed through a bottom wall 78 of the midsole 32. As with the bottom wall 70 associated with the first cavity 54, the bottom wall 78 associated with the second cavity 56 defines a bottom of the second cavity 56 and, thus, defines a bottom surface of the second cavity 56. Side surfaces 80 extend between the first aperture 74 and the bottom wall 78 to define the overall shape of the second cavity 56. As such, the side surfaces 80 cooperate with the bottom wall 78 to define the overall shape of the second cavity 56 between the first aperture 74 and the bottom wall 78.

The third cavity 56 is disposed closer to the posterior end 44 than the first cavity 54 and the second cavity 56 and includes a first aperture 82 formed in the first surface 60 of the midsole 32. The first aperture 82 defines an opening to the third cavity 58 and generally defines a shape of a perimeter of the third cavity 58 at the first surface 60. The third cavity 58 additionally includes a second aperture 84 disposed at an opposite end of the third cavity 58 than the first aperture 82 and formed through a bottom wall 86 of the third cavity of the midsole 32. As with the first cavity 54 and the second cavity 56, the bottom wall 86 is disposed at an opposite end of the third cavity 58 than the first aperture 82 and serves to define a bottom surface of the third cavity 58. Side surfaces 88 extend from the bottom wall 86 to the first aperture 82 and cooperate to define a perimeter of the third cavity 58.

As described, each of the first cavity 54, the second cavity 56 and the third cavity 58 include respective side surfaces 72, 80, 88 that define a shape of each cavity 54, 56, 58. As shown in FIG. 3, one or more of the side surfaces 72, 80, 88 may taper in a direction from the respective first apertures 66, 74, 82 to the respective bottom walls 70, 78, 86. By providing the side surfaces 72, 80, 88 with a taper that extends from the respective first apertures 66, 74, 82 to the respective bottom walls 70, 78, 86, a volume of the cavities 54, 56, 58 is generally reduced in a direction extending from the first surface 60 of the midsole 32 to the second surface 64 of the midsole 32. As shown in FIG. 3, the degree to which the side surfaces 72, 80, 88 taper in the direction extending from the first surface 62 to the second surface 64 may vary amongst the cavities 54, 56, 58. For example, the first cavity 54 may include side surfaces 72 having a more gradual taper than either of the side surfaces 80, 88 of the second cavity 56 and the third cavity 58, respectively. Further, the side surfaces 88 of the third cavity 58 may include less of a taper than either of the side surfaces 72, 80 of the first cavity 54 and the second cavity 56, respectively.

With particular reference to FIG. 3, the first cavity 54, the second cavity 56, and the third cavity 58 are shown as being formed into the material of the midsole 32 at spaced apart locations along the longitudinal access (L) of the sole structure 14. Accordingly, a first wall 90 of the midsole 32 may extend between the first cavity 54 and the second cavity 56 and a second wall 92 may extend between the second cavity 56 and the third cavity 58. Accordingly, the first wall 90 may serve to separate the first cavity 54 from the second cavity 56 while the second wall 92 serves to separate the second cavity 56 from the third cavity 58 in a direction extending along the longitudinal access (L) of the sole structure 14. As will be described in greater detail below, the walls 90, 92 help to maintain a desired position of the cushioning member 36 relative to the midsole 32 and, thus, help to provide a desired cushioning effect to a foot of a user during use of the article of footwear 10.

With particular reference to FIGS. 2 and 3, the cushioning member 36 is shown as including a first barrier member 94, a second barrier member 96, and a quantity of particulate matter 98 contained within the cushioning member 36. In one configuration, the second barrier member 96 is attached to the first barrier member 94 to contain the particulate matter 98 generally between the second barrier member 96 and the first barrier member 94. For example, the cushioning member 36 may include a first compartment 100, a second compartment 102, and a third compartment 104 each respectively incorporating a first quantity of particulate matter 98, a second quantity of particulate matter 98, and a third quantity of particulate matter 98.

The first barrier member 94 and the second barrier member 96 may be formed from flexible materials that allow the first barrier member 94 and the second barrier member 96 to stretch and move during use of the article of footwear 10 when the sole structure 14 is subjected to a force from a foot of a user. In one configuration, the first barrier member 94 and the second barrier member 96 are formed from different materials. For example, the first barrier member 94 may be formed from a polymer material such as thermoplastic polyurethane (TPU). Forming the first barrier member 94 from TPU allows the first barrier member 94 to be formed from an impermeable material and, in some configurations, allows the first barrier member 94 to be formed from an optically clear and/or translucent material.

The second barrier member 96 may be formed from a flexible material such as, for example, spandex. Forming the second barrier member 96 from a flexible material such as spandex also allows the second barrier member 96 to be permeable. Forming the second barrier member 96 from a permeable material permits fluid communication through the second barrier member 96 into the first compartment 100, the second compartment 102, and the third compartment 104, thereby permitting air circulation from an area external to the cushioning member 36 into the compartments 100, 102, 104.

The second barrier member 96 may be attached to the first barrier member 94 via an adhesive 106. The adhesive 106 may be a hot melt adhesive and may surround a perimeter of each of the first compartment 100, the second compartment 102, and the third compartment 104. As such, the adhesive 106 joins the material of the second barrier member 96 to the material of the first barrier member 94 between each of the compartments 100, 102, 104, thereby defining an interior void within each compartment 100, 102, 104 between the second barrier member 96 and the first barrier member 94.

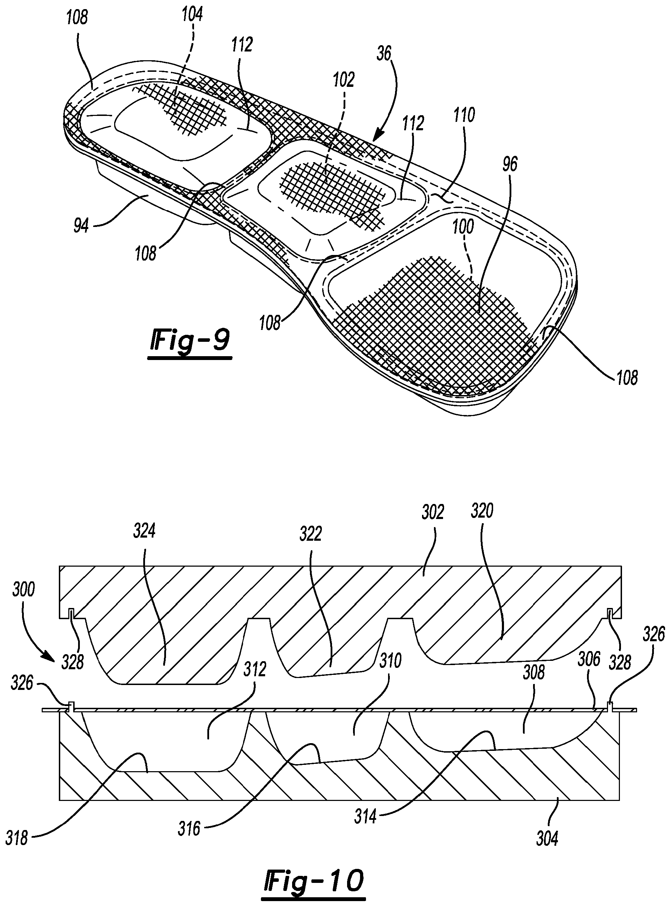

Attaching the second barrier member 96 to the first barrier member 94 around a perimeter of each compartment 100, 102, 104 such that the adhesive 106 completely surrounds each compartment 100, 102, 104 creates a web member 108 in areas where the second barrier member 96 is attached to the first barrier member 94. The web member 108 may extend between each compartment 100, 102, 104 as well as around an outer perimeter of the cushioning member 36, as shown in FIG. 9. The web member 108 may include a thickness that is substantially equal to a depth of the first surface 60 of the midsole 32 relative to the upper surface 62 of the midsole 32. Further, the overall shape of the cushioning member 36 as defined by the web member 108 at a perimeter of the cushioning member 36 may include a shape that is substantially equal to a shape of the first surface 60, as formed into the upper surface 62. Accordingly, when the cushioning member 36 is inserted into the midsole, an upper surface 110 of the cushioning member 36 is substantially flush with the upper surface 62 of the midsole 32, thereby providing a uniform surface that receives the substrate 38. Providing a uniform surface that opposes the substrate 38 provides a degree of comfort to a foot of a user by preventing the user from feeling a transition or junction between the midsole 32 and the cushioning member 36.

With particular reference to FIG. 3, the cushioning member 36 is shown as including varying amounts of particulate matter 98 disposed within the compartments 100, 102, 104. For example, the first compartment 100, the second compartment 102, and the third compartment 104 are each shown as including different amounts of the particulate matter 98. Namely, the first compartment 100 disposed with the first cavity 54 and, thus, the forefoot portion 16 of the sole structure 14, includes less particulate matter 98 than the second compartment 102 and the third compartment 104. Conversely, the third compartment 104 received by the third cavity 58 of the midsole 32 and, thus, located in the heel portion 20 of the sole structure 14 receives a greater amount of particulate matter 98 than the second compartment 102 and the first compartment 100. While the compartments 100, 102, 104 are described and shown as receiving different amounts of particulate matter 98, each compartment 100, 102, 104 may receive approximately the same amount of particulate matter 98. Further, one or more of the compartments 100, 102, 104 may receive a volume of particulate matter 98 that creates a bulge 112 in the outer surface 110 of the cushioning member 36 (FIG. 9). For example, the second compartment 102 and the third compartment 104 of the cushioning member 36 may each include a bulge 112 that extends from a nominal plane defined by the second barrier member 96 at a location of the second compartment 102 and the third compartment 104. Namely, the bulges 112 extend from a nominal plane defined by the web member 108.

Regardless of the amount of particulate matter 98 disposed within the respective compartments 100, 102, 104, the particulate matter 98 may be used to enhance the functionality and cushioning characteristics that the material of the midsole 32 provides. For example, the particulate matter 98 contained within the compartments 100, 102, 104 may include foam beads having a substantially spherical shape. Further, the foam beads defining the particulate matter 98 may have approximately the same size and shape or, alternatively, may have at least one of a different size and shape. Regardless of the particular size and shape of the particulate matter 98, the particulate matter 98 cooperates with the outsole 34 and the midsole 32 to provide the article of footwear 10 with a cushioned and responsive performance during use.

The cushioning member 36 is inserted into the midsole 32 such that the first compartment 100 is received by the first cavity 54, the second compartment 102 is received by the second cavity 56, and the third compartment 104 is received by the third cavity 58. Once the cushioning member 36 is disposed within the midsole 32, the surface 110 of the cushioning member 36 is substantially flush with the upper surface 62 of the midsole 32 at the web member 108 that defines a perimeter of the cushioning member 36. As such, the second barrier member 96 cooperates with the material of the midsole 32 at the upper surface 62 of the midsole 32 to provide a generally uniform surface against which the substrate 38 resides when the sole structure 14 is attached to the upper 12.

The outsole 34 may be formed from a transparent or translucent material and may include one or more discreet portions that are separate from one another. The outsole 34 may be formed from a durable material such as, for example, rubber and may be attached to the second surface 64 of the midsole 32. The individual portions of the outsole 34 may be attached to the second surface 64 of the midsole 32 proximate to the second apertures 68, 76, 84, respectively associated with the first cavity 54, the second cavity 56, and the third cavity 58. The portions of the outsole 34 may be separated from one another along a length of the sole structure 14 in a direction substantially parallel to the longitudinal axis (L). While the outsole 34 is described and shown as including individual portions that are spaced apart from one another, the outsole 34 could alternatively have a unitary construction that extends generally across the entire second surface 64 of the midsole 32 such that the outsole 34 extends continuously between the anterior end 42 and the posterior end 44 and between the medial side 46 and the lateral side 48. Regardless of the particular construction of the outsole 34 (i.e., unitary or discrete portions), the outsole 34 may include treads 35 that extend from the outsole 34 to provide increased traction with a ground surface during use of the article of footwear 10.

Forming the outsole 34 from a transparent or translucent material allows the cavities 54, 56, 58 to be viewed from the outsole 34 when the outsole 34 is attached to the midsole 32 at the second surface 64. Further, because the compartments 100, 102, 104 substantially fill the respective cavities 54, 56, 58 of the midsole 32, the compartments 100, 102, 104 and, thus, the particulate matter 98 disposed therein is likewise visible at the second apertures 68, 76, 84 of the midsole 32 through the material of the outsole 34. Accordingly, the particulate matter 98 residing within the respective compartments 100, 102, 104 of the cushioning member 36 is visible through the outsole 34 at the second apertures 68, 76, 84 associated with the respective cavities 54, 56, 58.

The sole structure 14 may be attached to the upper 12 via a suitable adhesive 114 (FIG. 3). For example, the adhesive 114 may extend between and attach the projection 52 of the midsole 32 to the outer surface 50 of the upper 12. Further, the adhesive 114 may attach the web member 108 of the cushioning member 36 to the midsole 32 at a junction of the web member 108 and the first surface 60 of the midsole 32.

Incorporation of the cushioning member 36 into the article footwear 10 provides a degree of comfort and cushioning to a foot of a user during use. For example, and as described above, the substrate 38 and the second barrier member 96 of the cushioning member 36 are formed from flexible materials. Accordingly, when a force is applied on the substrate 38 during use of the article footwear by a foot of a user, the force causes the substrate 38 and the material of the second barrier member 96 to flex and stretch, thereby allowing the foot of the user to engage and displace the particulate matter 98 disposed within the compartments 100, 102, 104. In so doing, the particulate matter 98 exerts a force on the material of the first barrier member 94, thereby causing the first barrier member 94 to likewise flex and stretch. Such movement of the first barrier member 94 compresses a material of the midsole 32 generally surrounding the compartments 100, 102, 104 which, in turn, absorbs forces associated with a walking or running movement.

Flexing and stretching of the materials of the substrate 38, the first barrier member 94, and the second barrier 96 along with compression of the material of the midsole 32 provides a degree of cushioning and comfort to a user while wearing the article of footwear 10. Further, interaction between a foot of a user with the particulate matter 98-permitted by the generally flexible nature of the material of the substrate 38 and the second barrier member 96-likewise provides cushioning to the foot of the user. Further, because of the particulate matter 98 is permitted to move relative to and within each compartment 100, 102, 104, the particulate matter 98 conforms to a shape of the user's foot and, thus, provides a degree of tailored cushioning that is specific to the shape of the user's foot. Further yet, because the particulate matter 98 is permitted to move relative to and within the first compartment 100, the second compartment 102, and the third compartment 104, the shape of the substrate 38 and the second barrier member 96 is dynamic and is largely based on the applied loads at the substrate 38 at any given time. In other words, the support provided by the particulate matter 98 disposed within the compartments 100, 102, 104 moves and shifts in response to the applied forces at the substrate 38. In so doing, the effective shape of the substrate 38 and the second barrier member 96 is constantly changing as the user applies forces at different locations of the substrate 38, thereby causing the particulate matter 98 to shift and move relative to within the compartments 100, 102, 104. As such, the cushioning member 36 provides the sole structure 14 and, thus, the article of footwear 10 with cushioning and support that dynamically responds to an applied force and automatically conforms to a shape of the user's foot, thereby providing the user with a tailored and personal cushioning system.

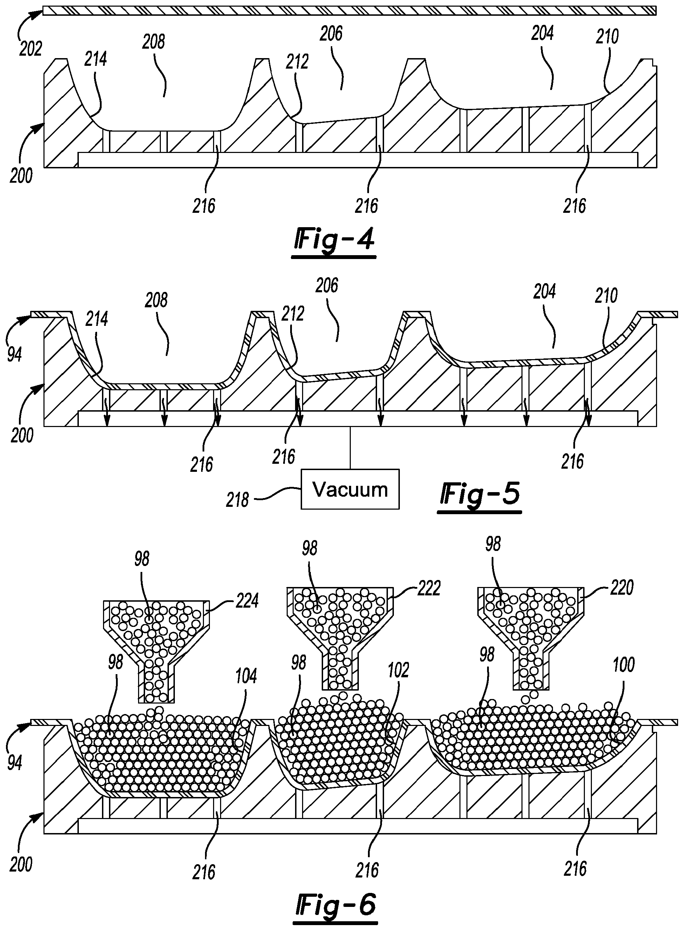

With particular reference to FIGS. 4-9, a method of making the cushioning member 36 will be described in detail. As will be described in detail below, the method of forming the cushioning member 36 shown in FIGS. 4-7 utilizes a thermoforming process to form the first barrier member 94 and, further, uses a heat press to attach the second barrier member 96 to the first barrier member 94 following insertion of the particulate matter 98 into the first compartment 100, the second compartment 102, and the third compartment 104.

As shown in FIG. 4, a tool 200 may be used to form a sheet of material 202 into the first barrier member 94. For example, and as described above, the first barrier member 94 may be formed from thermoplastic polyurethane (TPU). Accordingly, the sheet of material 202 may be a sheet of TPU material. The tool 200 may include a first cavity 204, a second cavity 206, and a third cavity 208. The first cavity 204 may include an arcuate surface 210 that provides the first compartment 100 with the shape shown in FIG. 5. Similarly, the second cavity 206 may correspond with the second compartment 102 and the third cavity 208 may correspond with the third compartment 104, whereby the second cavity 206 includes an arcuate surface 212 that conforms to the shape of the second compartment 102 and the third cavity 208 includes an arcuate surface 214 that conforms to the shape of the third compartment 104. The tool 200 may additionally include a series of vacuum ports 216 that are attached to a vacuum 218 (FIG. 5).

In operation, the sheet of material 202 may be placed adjacent to the tool 200 such that the sheet of material 202 opposes the first cavity 204, the second cavity 206, and the third cavity 208. Heat may be applied to the sheet of material 202 before and/or during application of a vacuum force on the sheet of material 202 via the vacuum ports 216. For example, the sheet of material 202 may be heated by an external heat source (not shown) and/or via heating elements (not shown) disposed within the tool 200 to heat the sheet of material 202 at the same time the sheet of material 202 is drawn into the cavities 204, 206, 208 via the vacuum 218 and vacuum ports 216.

As shown in FIG. 5, forming the sheet of material 202 such that the material 202 is drawn into the cavities 204, 206, 208 forms the respective compartments 100, 102, 104 of the cushioning member 36. Specifically, the material of the sheet of material 202 engages the arcuate surfaces 210, 212, 214 to form the sheet of material 202 into the various compartments 100, 102, 104 of the cushioning member 36. The heat and pressure applied to the sheet of material 202 (i.e. by the vacuum (218) and the internal heat source and/or the external heat source) causes the sheet of material 202 to conform generally to the shape of the tool 200 at the cavities 204, 206, 208, thereby forming the first barrier member 94 of the cushioning member 36. Once the sheet of material 202 is formed into the shape of the first barrier member 94, the material of the first barrier member 94 is permitted to cool, thereby causing the material of the first barrier member 94 to retain the shape of the tool 200, as defined by the arcuate surfaces 210, 212, 214 of the cavities 206, 208, 210, respectively.

Once the sheet of material 202 is formed into the shape of the first barrier member 94, as described above, the compartments 100, 102, 104 are filled with particulate matter 98. As described above, the particulate matter 98 includes foam beads which may have the same and/or different shapes to provide the cushioning member 36 with the ability to provide cushioning for the article of footwear 10 once the second barrier member 96 is attached to the first barrier member 94 and the cushioning member 36 is inserted in the midsole 32. According to the present invention, providing the first compartment 100 with the first quantity of particulate matter 98 and providing the second compartment 102 with the second quantity of particulate matter 98 includes providing the first compartment 100 and the second compartment 102 with foam beads.

The particulate matter 98 may be inserted into the compartments 100, 102, 104, by depositing the particulate matter 98 into each compartment 100, 102, 104 via a series of hoppers (FIG. 6). Specifically, a first hopper 220 may be aligned with the first compartment 100, a second hopper 222 may be aligned with the second compartment 102, and a third hopper 224 may be aligned with the third compartment 104 such that when the hoppers 220, 222, 224 release particulate matter 98, the particulate matter 98 is received by the respective compartments 100, 102, 104. In one configuration, the hoppers 220, 222, 224 may be gravity fed such that when a valve or other metering device (none shown) associated with the respective hoppers 220, 222, 224 is open, particulate matter 98 disposed within the hoppers 220, 222, 224 is automatically dispensed from the hoppers 220, 222, 224 and is received by the compartments 100, 102, 104 of the first barrier member 94. Once a predetermined quantity of particulate matter 98 is received by the first compartment 100, the second compartment 102, and the third compartment 104, the valves associated with the hoppers 220, 222, 224 may be closed to prevent further particulate matter 98 from being received by any of the compartments 100, 102, 104.

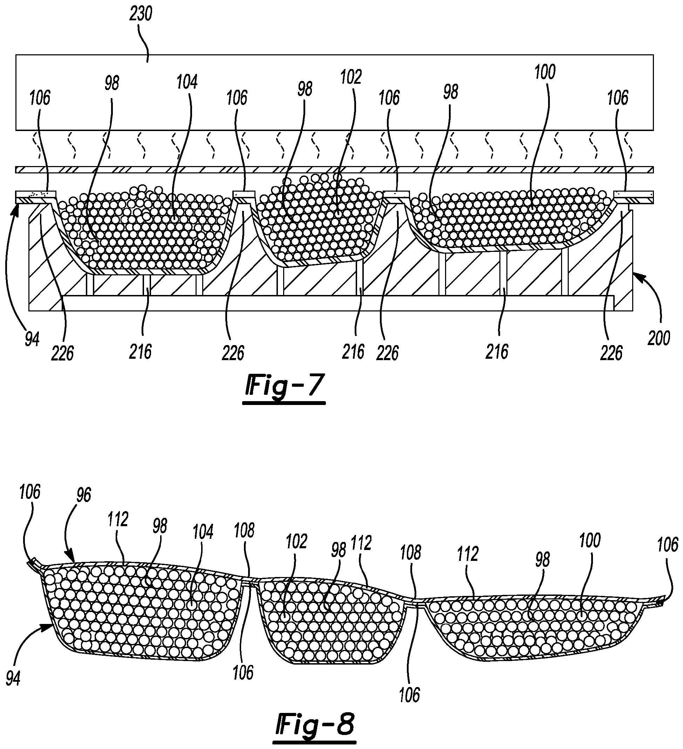

With particular reference to FIG. 7, the compartments 100, 102, 104 are shown as being substantially filled with particulate matter 98. At this point, the adhesive 106 may be applied at regions surrounding the compartments 100, 102, 104 to allow the first barrier member 94 to be attached to the second barrier member 96. As described above, and in one configuration, the adhesive 106 may be a hot melt adhesive. The hot melt adhesive may be placed on the first barrier member 94 at areas surrounding the compartments 100, 102, 104 and at raised portions 226 of the tool 200. The raised portions 226 may generally mimic a shape of the first wall 90 and the second wall 92 of the midsole 32 to allow the cushioning member 36 to be matingly received by the cavities 54, 56, 58 of the midsole 32, as shown in FIG. 3.

Once the adhesive 106 is disposed on the first barrier member 94 in areas surrounding the first compartment 100, the second compartment 102, and the third compartment 104, a sheet of material 228 may be placed between the first barrier member 94 and a heat source 230. The sheet of material 228 may be positioned on the adhesive 106 such that the sheet of material 228 opposes and covers the first compartment 100, the second compartment 102, and the third compartment 104. Once the sheet of material 228 is properly placed relative to the first barrier member 94, the heat source 230 may be activated, thereby causing the adhesive to bond with the sheet of material 228 and seal the first compartment 100, the second compartment 102, and the third compartment 104.

Once the sheet of material 228 is attached to the first barrier member 94, the sheet of material 228 closes the first compartment 100, the second compartment 102, and the third compartment 104 and, thus, forms the second barrier member 96. As shown in FIG. 8, the second barrier member 96 may define bulges 112 depending on the quantity of the particulate matter 98 disposed within the respective compartments 100, 102, 104, as described above. Regardless of the quantity of particulate matter 98 received by the respective compartments 100, 102, 104, once the sheet of material 228 is attached to the first barrier member 94 and, thus, forms the second barrier member 96, the cushioning member 36 may be inserted into the midsole 32 such that the first compartment 100 is received by the first cavity 54 of the midsole 32, the second compartment 102 is received by the second cavity 56 of the midsole 32, and the third compartment 104 is received by the third cavity 58 of the midsole 32.

As described above, the cushioning member 36 may be formed via a thermoforming process. In so doing, the first compartment 100, the second compartment 102, and the third compartment 104 receive a predetermined quantity of particulate matter 98 and, further, may result in the second barrier member 96 forming bulges 112 at an outer surface 110 that opposes the substrate 38 once installed in the article of footwear 10. While the quantity of particulate matter 98 disposed within the first compartment 100, the second compartment 102, and/or the third compartment 104 may result in one or more bulges 112 being formed at the second barrier member 96, the bulges 112 are limited to what can be deposited in the various compartments 100, 102, 104 via the hoppers 220, 222, 224 without having the particulate matter 98 spill over edges of the first barrier member 94. Accordingly, the degree to which the bulges 112 extend from the cushioning member 36 is limited to the quantity of particulate matter 98 that can be stacked in the compartments 100, 102, 104 without the particulate matter 98 spilling over edges of the first barrier member 94.

The bulges 112 could be increased by first attaching the second barrier member 96 to the first barrier member 94, thereby closing the compartments 100, 102, 104 prior to insertion of the particulate matter 98 into the compartments 100, 102, 104. Inserting the particulate matter 98 into the compartments 100, 102, 104 after the second barrier member 96 is attached to the first barrier member 94 requires use of a different process than the thermoforming process described above.

As will be described in greater detail below, a compression molding process could be used in place of the thermoforming process in an effort to first join the second barrier member 96 to the first barrier member 94 before inserting the particulate matter 98 into the compartments 100, 102, 104. First attaching the second barrier member 96 to the first barrier member 94 before filling the compartments 100, 102, 104 with particulate matter 98 allows one or more of the compartments 100, 102, 104 to be overfilled with particulate matter 98 relative to the amount of particulate matter 98 capable of being inserted into the compartments 100, 102, 104 when the cushioning member 36 is formed via the thermoforming process described above and shown in FIGS. 4-7.

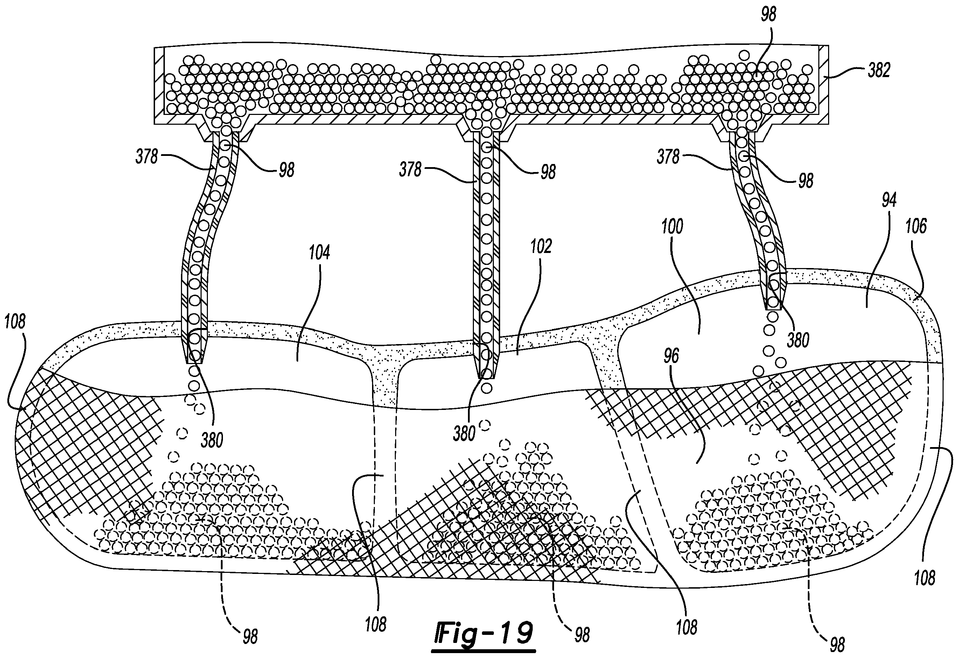

With reference to FIGS. 10-20, a compression molding process for use in making the cushioning member 36 will be described in detail.

The compression molding process may utilize a mold 300 including an upper mold half 302 and a lower mold half 304. The lower mold half 304 may include a first cavity 308, a second cavity 310, and a third cavity 312. The first cavity 308 may include an arcuate surface 314 used to form the first compartment 100 of the first barrier member 94. Similarly, the second cavity 310 may include an arcuate surface 316 used to form the second compartment 102 of the first barrier member 94 and the third cavity 312 may include an arcuate surface 318 used to form the third compartment 104 of the first barrier member 94. The cavities 308, 310, 312 and associated arcuate surfaces 314, 316, 318 may be identical to the cavities 204, 206, 208 and arcuate surfaces 210, 212, 214, respectively, of the tool 200 used to form the first barrier member 94 via the thermoforming process shown in FIGS. 4-7.

The upper mold half 302 may include projections that extend into the respective cavities 308, 310, 312. Specifically, the upper mold half 302 may include a first projection 320, a second projection 322, and a third projection 324 that are respectively received by the first cavity 308, the second cavity 310, and the third cavity 312. The projections 320, 322, 324 may mimic a shape of the respective arcuate surfaces 314, 316, 318 and may be spaced apart from the arcuate surfaces 314, 316, 318 by a thickness of a sheet of TPU material used to form the first barrier member 94, as will be described in greater detail below.

In operation, a sheet of material 306 such as a sheet of TPU material may be inserted between the upper mold half 302 and the lower mold half 304. The sheet of material 306 may be attached to the lower mold half 304 via a pair of posts 326 extending from the lower mold half 304 and through a portion of the sheet of material 306.

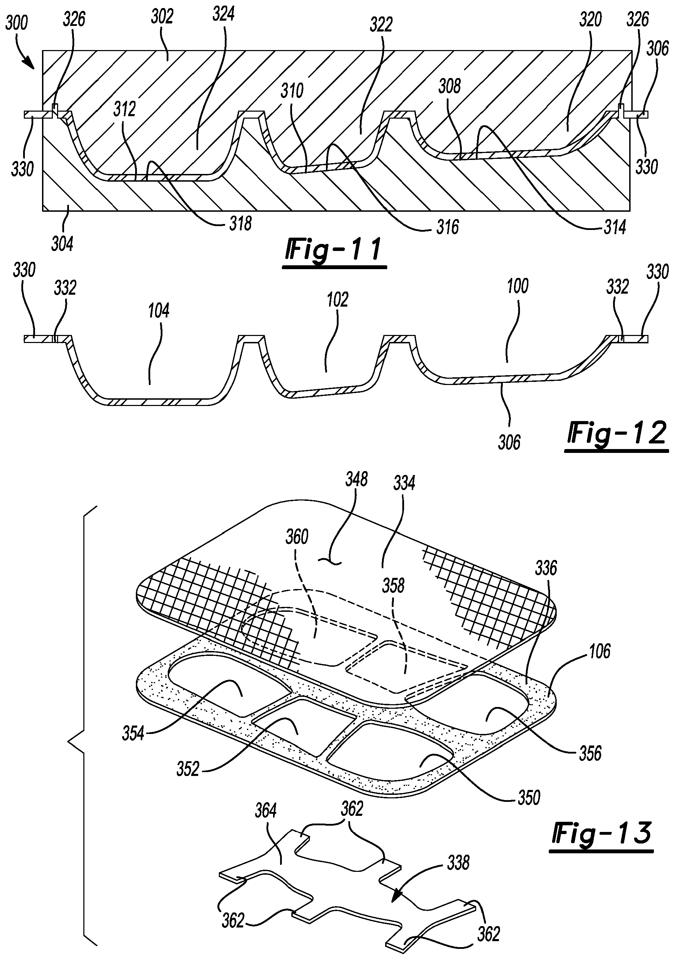

Once the sheet of material 306 is disposed between the upper mold half 302 and the lower mold half 304 (FIG. 10), the mold halves 302, 304 may be brought towards one another or, alternatively, one of the mold halves 302, 304 may be moved toward the other of the mold halves 302, 304 until the mold halves 302, 304 are moved into the position shown in FIG. 11. Namely, the upper mold half 302 and/or the lower mold half 304 may be moved from the position shown in FIG. 10 to the position shown in FIG. 11 to form the sheet of material 306 from a substantially plainer shape (FIG. 10) to the shape of the first barrier member 94 (FIG. 11). When the mold halves 302, 304 are positioned in the configuration shown in FIG. 11, the posts 326 may be received within respective apertures 328 of the upper mold half 302, thereby defining a relative spacing between the upper mold half 302 and the lower mold half 304. In one configuration, the spacing is approximately equal to a thickness of the sheet of material 306 to prevent compression of the sheet of material 306 between the projections 320, 322, 324 and the respective arcuate surfaces 314, 316, 318 of the cavities 308, 310, 312.

Engaging the sheet of material 306 with the posts 326 maintains a position of the sheet of material 306 at the posts 326 relative to the lower mold half 304. Accordingly, when the upper mold half 302 engages the sheet of material 306 at the projections 320, 322, 324, the material of the sheet of material 306 is stretched and formed into the shape defined by the arcuate surfaces 314, 316, 318. Deformation of the sheet of material 306 by the upper mold half 302 forms the sheet of material 306 into the shape shown in FIG. 12.

As shown in FIG 12, the sheet of material 306 is formed into a shape that defines the compartments 100, 102, 104 but includes additional material at the location where the posts 326 engage the sheet of material 306 relative to the shape of the first barrier member 94 shown in FIG. 9. Accordingly, the sheet of material 306 depicted in FIG. 12 is a partially formed first barrier member 94. The additional material defines a flange 330 that extends generally around a perimeter of the sheet of material 306 and surrounds the compartments 100, 102, 104 formed by the mold 300. The flange 330 may additionally include a pair of apertures 332 formed by the posts 326 during formation of the sheet of material 306 into the configuration shown in FIG. 12. As will be described in greater detail below, the flange along with the apertures 332 may be removed from the sheet of material 306 to form the first barrier member 94 via a die-cutting process, for example.

Once the sheet of material 306 is formed into the configuration shown in FIG. 12, a sheet of material 334 used to form the second barrier member 96 may be attached to sheet of material 306. As described above, the second barrier member 96 may be formed from a flexible material such as spandex. Further, the second barrier member 96 is described as being attached to the first barrier member 94 via an adhesive 106. As shown in FIG. 13, the adhesive 106 may be provided in the form of a sheet of adhesive material 336 such as, for example, a sheet of hot melt adhesive. Finally, a blocking element 338 may be positioned between the adhesive 106 and the sheet of material 306 that forms the first barrier member 94 to form areas between the adhesive 106 and the first barrier member 94 that are not joined. Forming areas between the adhesive 106 and the first barrier member 94 that are not joined likewise forms areas between the first barrier member 94 and the second barrier member 96 that are not joined. As will be described in greater detail below, the areas where the first barrier member 94 is separated from the second barrier member 96 via the blocking element 338 provides an area where particulate matter 98 is permitted to be inserted into the first compartment 100, the second compartment 102, and the third compartment 104.

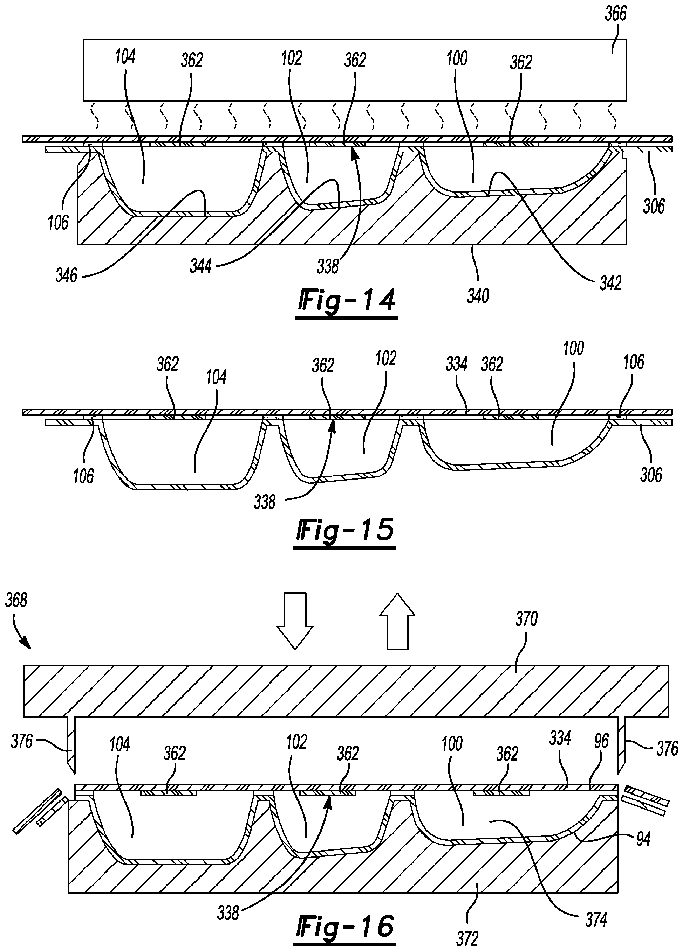

The sheet of material 306 may be placed in a tool 340 (FIG.14) that generally conforms to the shape of the first material 306 after formation of the sheet of material 306 into the configuration shown in FIG. 12. The tool 340 may be identical to the tool 200 described above with respect to the thermoforming process. Alternatively, the tool 340 may be identical to the tool 200 with the exception of the tool 340 failing to include the vacuum ports 216 associated with the tool 200. Regardless of the particular configuration of the tool 340, the tool 340 may include a first cavity 342, a second cavity 344, and a third cavity 346 that respectively receive the first compartment 100, the second compartment 102, and the third compartment 104 defined by the sheet of material 306 after formation by the mold 300.

After the sheet of material 306 is inserted into the tool 340 such that the first compartment 100 is received by the first cavity 342, the second compartment 102 is received by the second cavity 342, and the third compartment 104 is received by the third cavity 346, the blocking element 338 may be positioned over the sheet of material 306, the sheet of adhesive material 336 may be placed on the blocking element 338, and the sheet of material 334 forming the second barrier member 96 may be placed on top of the sheet of adhesive 336. Accordingly, the blocking element 338 is disposed between the sheet of adhesive 336 and the sheet of material 306 forming the first barrier member 94, the sheet of adhesive 336 is disposed between the sheet of material 334 forming the second barrier member 96 and the blocking element 338, and the sheet of material 334 that forms the second barrier member 96 is disposed on the sheet of adhesive material 336 and includes an exposed outer surface 348.

With particular reference to FIG. 13, the sheet of adhesive is shown as including a first aperture 350, a second aperture 352, and a third aperture 354. The first aperture 350 includes a shape that corresponds to a shape of the first compartment 100 to allow the adhesive 106 to completely surround the first compartment 100. Similarly, the second aperture 352 includes a shape that corresponds to a shape of the second compartment 102 to allow the adhesive 106 of the sheet of adhesive material 336 to completely surround the second compartment 102 while the third aperture 354 includes a shape that corresponds to a shape of the third compartment 104 to allow the adhesive 106 of the sheet of adhesive material 336 to completely surround the third compartment 104.

The sheet of adhesive material 336 may additionally include a fourth aperture 356, a fifth aperture 358, and a sixth aperture 360. The fourth aperture 356, the fifth aperture 358, and the sixth aperture 360 may respectively correspond to a first compartment 100, a second compartment 102, and a third compartment 104 of a first barrier member 94 of an additional cushioning member 36. For example, the sheet of adhesive material 336 may be used to simultaneously form a pair of cushioning members 36. As shown in FIG. 13, the sheet of adhesive material 336 and the related apertures 350, 352, 354, 356, 358, 360 are sized and positioned to accommodate cushioning members 36 for use with different articles of footwear 10. Namely, the apertures 350, 352, 354 are used to form a cushioning member 36 for use with a right-foot article of footwear 10 while the apertures 356, 358, 360 are used to form a cushioning member 36 for use with a left-foot article of footwear 10. While the sheet of adhesive material 336 and the related apertures 350-360 are described and shown as being used to form a cushioning member 36 for use with a right-foot article of footwear 10 and a cushioning member 36 for use with a left-foot article of footwear 10, respectively, the apertures 350-360 could be formed through the sheet of adhesive material 336 and positioned such that a pair of cushioning members 36 having the same configuration are formed. Namely, a pair of cushioning members 36 could be formed for use with a right-foot article of footwear 10 or, alternatively, a pair of cushioning members 36 could be formed for use with a left-foot article of footwear 10.

Finally, while a pair of cushioning members 36 are described as being formed simultaneously via the sheet of adhesive material 336, the sheet of adhesive material 336 could only include three apertures total such that only one cushioning member 36 is formed. Namely, the sheet of adhesive material 336 could include apertures 350, 352, 354 for use in making a cushioning member 36 for a right-foot article of footwear 10 or, alternatively could only include apertures 356, 358, 360 for use in making a cushioning member 36 for use with a left-foot article of footwear 10. While the sheet of adhesive material 336 could be used to form a pair of cushioning members 36 for the same or different footed articles of footwear or, alternatively, could be configured for making a single cushioning member 36, the sheet of adhesive material 336 will be described and shown hereinafter as including six apertures 350-360 that are used to form a pair of cushioning members 36 that are respectively configured for use in a right-foot article of footwear 10 and a left-foot article of footwear 10.

While not specifically shown, the tool 340 could include two sets of cavities 342, 344, 346 that respectively receive portions of the same sheet of material 306 or individual sheets of material 306 to position the compartments 100, 102, 104 relative to the apertures of the sheet of adhesive material 336. In this manner, the tool 340 could support a pair of first compartments 100, a pair of second compartment 102, and a pair of third compartments 104 of the same or different sheets of material 306 relative to the sheet of adhesive material 336 to simultaneously join the pairs of compartments 100, 102, 104 to the sheet of material 334 via the adhesive 106.

The blocking element 338 may be formed from a material that resists bonding to the adhesive 106 of the sheet of adhesive material 336. For example, the blocking element 338 may be formed from Kevlar® that inhibits bonding between the adhesive 106 of the sheet of adhesive material 336 and the sheet of material 306 that forms the first barrier member 94.

Regardless of the material used to form the blocking element 338, the blocking element 338 may include a series of projections 362 extending from a main body 364. The projections 362 may be disposed along a length of the main body 364 such that each projection 362 is aligned with a respective aperture 350-360 of the sheet of adhesive material 336.

As described, the sheet of adhesive material 336 is positioned such that the apertures 350-360 are aligned with respective compartments 100, 102, 104 formed by one or more sheets of material 306 to simultaneously form a pair of cushioning members 36. Accordingly, aligning the projections 362 with the apertures 350-360 such that one projection 362 is aligned with each of the respective apertures 350-360 likewise aligns the projections 362 with the compartments 100, 102, 104 of a pair of first barrier members 94 used to form a pair of cushioning members 36. Accordingly, when the blocking element 338 is disposed between the sheet of adhesive material 336 and the sheet(s) of material 306 forming the first barrier members 94, the blocking element 338 is positioned such that the projections 362 are respectively aligned with the compartments 100, 102, 104 of each barrier member 94.

Once the blocking element 338, the sheet of adhesive material 336, and the sheet of material 334 forming the second barrier members 96 are stacked on the sheet(s) of material 306 forming the first barrier members 94, a heating device 366 may be used to apply heat to surface 348. Heating the sheet of material 334 that forms the second barrier members 96 activates the adhesive 106 of the sheet of adhesive material 336, thereby bonding the sheet of material 334 forming the second barrier members 96 to the sheet of material 306 forming the first barrier members 94 at every location with the exception of the locations of the blocking element 338. Namely, the sheet of adhesive material 336 is not bonded to the sheet(s) of material 306 forming the first barrier members 94 at the location of the projections 362 and the main body 364 of the blocking element 338.

Once the sheet of material 334 that forms the second barrier members 96 is attached to the sheet(s) of material 306 that forms the first barrier members 94, the assembly includes the configuration shown in FIG. 15. At this point, the sheet of material 334 forming the second barrier members 96 is attached to the sheet(s) of material 306 forming the first barrier members 94 but does not include particulate matter 98. As such, the configuration shown in FIG. 15 is a pre-filled barrier member devoid of particulate matter 98.

As described above with respect to FIG. 13, the sheet of adhesive material 336 and blocking element 338 are used to form a pair of cushioning members 36. The pair of cushioning members 36 may be separated from one another and formed into the shape of the cushioning member 36 shown above with respect to FIG. 9 by subjecting the sheet of material 334 forming the pair of second barrier members 96 and the sheet(s) of material 306 forming the first barrier members 94 to a die-cutting process, as shown in FIG. 16. Namely, the joined sheets of material 306, 334 may be inserted into a die-cutting tool 368 having an upper die 370 and a lower die 372. Specifically, the configuration shown in FIG. 15 may be inserted into a cavity 374 of the lower mold 372 to properly position the joined sheets of material 306, 334 relative to a cutting mechanism 376 associated with the upper die 370. While not specifically illustrated, the cutting mechanism 376 includes a shape defining the outer perimeter of the cushioning member 36 shown in FIG. 9. Further, while only one cutting mechanism 376 is shown in cross-section in FIG. 15, a pair of cutting mechanisms 376 could be used if a pair of cushioning members 36 are being simultaneously cut from the joined sheets of material 306, 334.

In operation, when the upper die 370 and, thus, the cutting mechanism(s) 376, are translated toward the lower die 372, the cutting mechanism 376 engages an outer perimeter of the joined sheets of material 306, 334, thereby separating the pre-filled cushioning members 36 from one another and forming the pre-filled cushioning members 36 into the shape shown in FIG. 9. At this point, the pair of pre-filled cushioning members 36 are separated from one another and may be filled with a predetermined quantity of particulate matter 98.

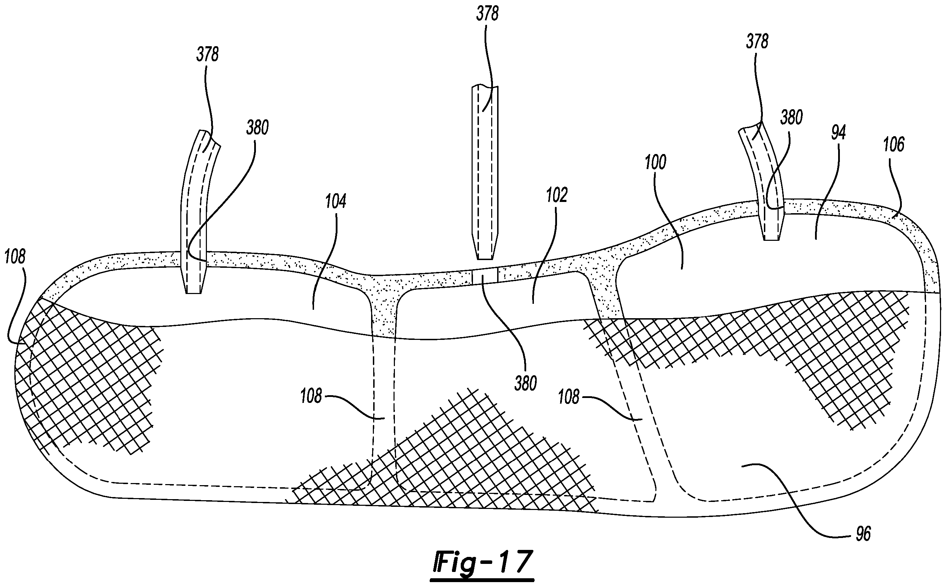

With particular reference to FIGS. 17-19, the compartments 100, 102, 104 are shown as receiving an injection nozzle 378 at respective ports 380 associated with the compartments 100, 102, 104. The ports 380 are formed at locations of the projections 362 of the blocking element 338. Namely, and as described above, the projections 262 prevent the adhesive material 106 of the sheet of adhesive material 336 from joining the second barrier member 96 to the first barrier member 94 at the locations of the projections 362. Accordingly, the ports 380 are formed at the locations of the projections 362 of the blocking element 338, thereby allowing the nozzles 378 to be inserted into the respective compartments 100, 102, 104.

In operation, the nozzles 378 are inserted into the respective ports 380 of the compartments 100, 102, 104 and are in fluid communication with the interiors of the compartments 100, 102, 104. Note that the views shown in FIGS. 17-19 are partial cut-away views, whereby a portion of the second barrier member 96 is removed to show the first compartment 100, the second compartment 102, and the third compartment 104 of the first barrier member 94.

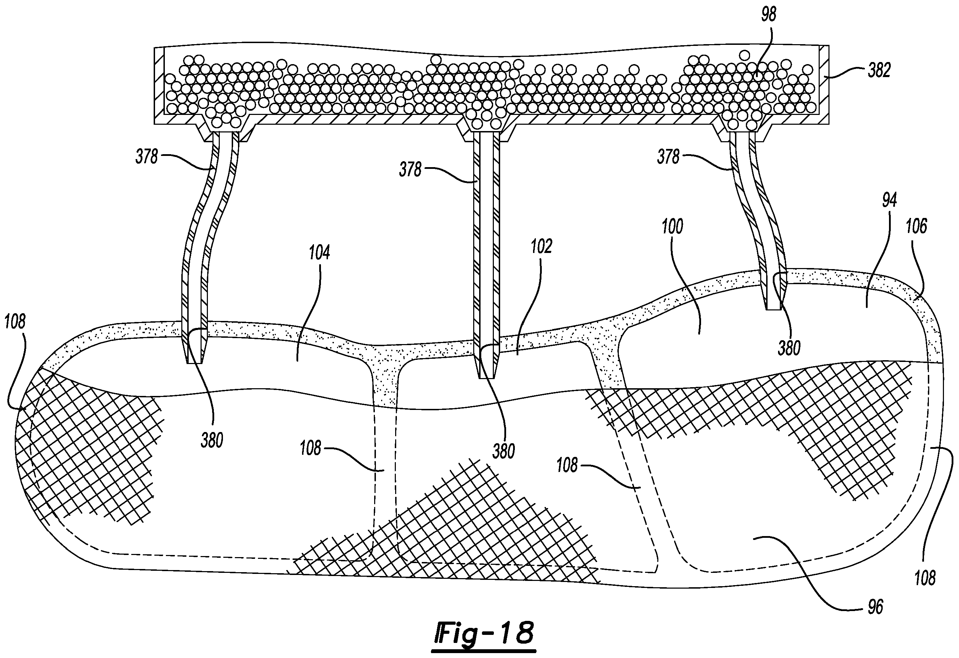

Once the nozzles 378 are disposed within the ports 380 such that the nozzles 378 are disposed between the second barrier member 96 and the first barrier member 94, particulate matter 98 may be injected into the nozzles 378 via fluid pressure. For example, air pressure may be used to direct particulate matter 98 disposed within a hopper 382 (FIG. 18) into the nozzles 378. While the nozzles 378 are described and shown as being associated with a common hopper 382, the nozzles 378 could alternatively be associated with individual hoppers that supply the nozzles 378 with particulate matter 98.

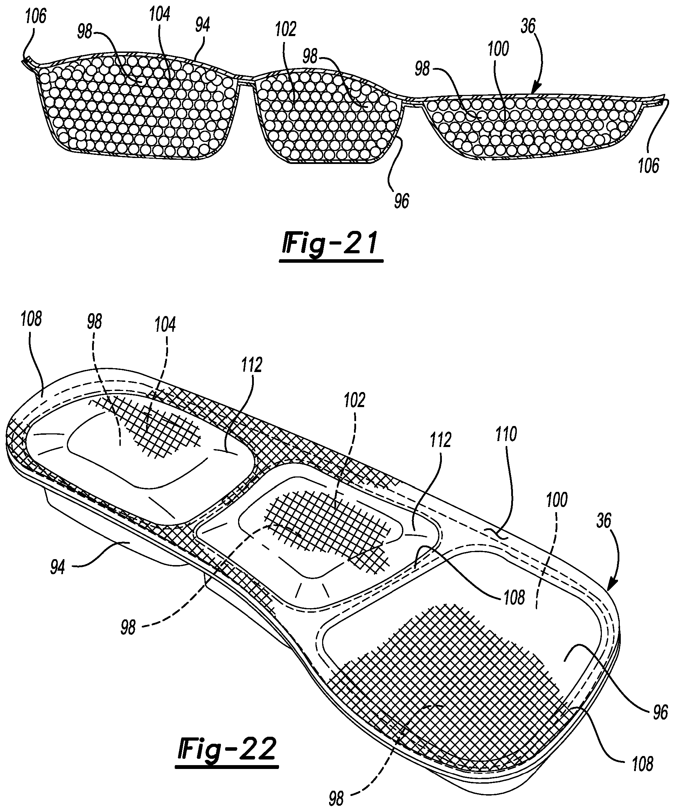

As shown in FIGS. 17-19, the nozzles 378 may include an inner diameter that is substantially equal to an outer diameter of the particulate matter 98 or, alternatively, is slightly larger than the outer diameter of the particulate matter 98 to prevent bunching and clogging of the particulate matter 98 within the nozzles 378. The particulate matter 98 may be injected into the compartments 100, 102, 104 via the nozzles 378 and, further, because the particulate matter 98 is injected under fluid pressure such as air pressure, the particulate matter 98 disposed within the compartments 100, 102, 104 may overfill one or more of the compartments 100, 102, 104. Accordingly, the compartments 100, 102, 104 may include a larger quantity of particulate matter 98 as compared to a quantity of particulate matter received within the compartments 100, 102, 104 when the compartments 100, 102, 104 are filled with particulate matter 98, as described above with respect to the thermoforming process of FIGS. 4-7. Namely, because the particulate matter 98 is injected into the compartments 100, 102, 104 under fluid pressure and, further, because the second barrier member 96 is attached to the first barrier member 94 and each barrier member 94, 96 is formed from a flexible material, the particulate matter 98 may be overfilled in each of the compartments 100, 102, 104, thereby resulting in a greater bulge 112 at one or more of the compartments 100, 102, 104. The bulges are shown in FIGS. 21 and 22 as extending from a surface of the second barrier member 96.

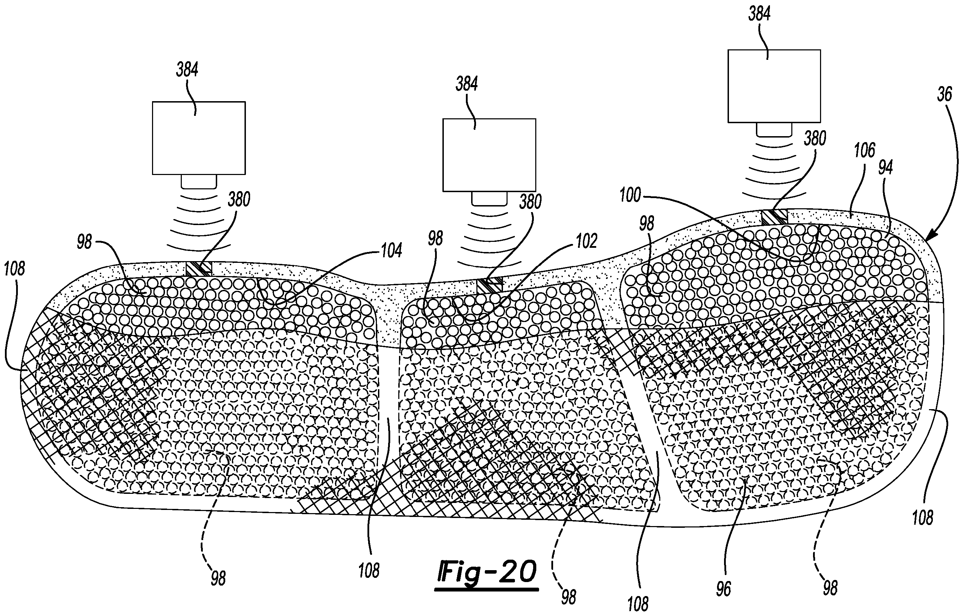

Once a desired quantity of particulate matter is disposed within each compartment 100, 102, 104, the ports 380 may be closed by joining the first barrier member 94 and the second barrier member 96 at the ports 380. For example, the first barrier member 94 and the second barrier member 96 may be locally subjected to a welding process such as radio frequency (RF) welding at each port location. As shown in FIG. 20, one or more welding apparatuses 384 may be used to join the first barrier member 94 and the second barrier member 96 at the location of the ports 380, thereby closing the ports 380 and containing the particulate matter 98 within the compartments 100, 102, 104.

As shown in FIGS. 21 and 22, a formed and filled cushioning member 36 is illustrated and includes a similar configuration as the cushioning member 36 formed via the thermoforming process described and shown above with respect to FIGS. 4-7. However, the cushioning members 36 shown in FIGS. 21 and 22 may include a greater quantity of particulate matter 98 in one or more of the chambers 100, 102, 104 and, thus, may include a greater bulge 112 at the second barrier member 96. Finally, the location of the ports 380 where RF welding is used to join the first barrier member 94 and the second barrier member 96 may be visible at the web member 108 when compared to the web member 108 formed via the thermoforming process of FIGS. 4-7.

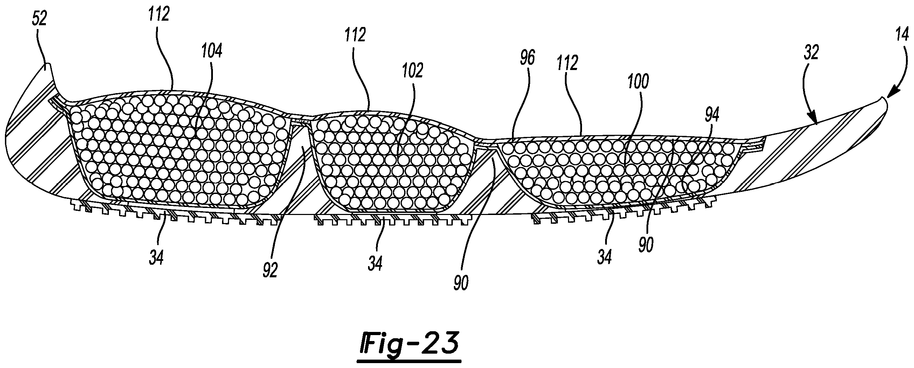

The cushioning member 36 formed via the thermoforming process of FIGS. 4-7 or via the compression molding process of FIGS. 10-20, may be incorporated in the midsole 32, as shown in FIG. 23. Namely, the first compartment 100 may be aligned with the first cavity 54 of the midsole 32, the second compartment 102 may be aligned with the second cavity 56 of the midsole 32, and the third compartment 104 may be aligned with the third cavity 58 of the midsole 32 such that the compartments 100, 102, 104 are respectively received by the cavities 54, 56, 58. Once the cushioning member 36 is inserted into the midsole 32, the midsole 32 may be attached to the upper 12. At this point, the cushioning member 36 may be used to provide a degree of comfort and cushioning to a foot of a wearer during use of the article of footwear 10.

## Claims

1. A method of making a sole structure (14) for an article of footwear (10), the method comprising:
providing a midsole (32) with a first cavity (54) and a second cavity (56);
forming a first barrier member (94) from a first material (306), the first barrier member (94) including a first compartment (100) and a second compartment (102);
forming a second barrier member (96) from a second material;
providing the first compartment (100) with a first quantity of particulate matter (98);
providing the second compartment (102) with a second quantity of particulate matter (98);
covering the first compartment (100) with the second barrier member (96);
covering the second compartment (102) with the second barrier member (96);
positioning the first compartment (100) within the first cavity (54); and
positioning the second compartment (102) within the second cavity (56),
wherein providing the first compartment (100) with the first quantity of particulate matter (98) and providing the second compartment (102) with the second quantity of particulate matter (98) includes providing the first compartment (100) and the second compartment (102) with foam beads.

2. The method of Claim 1, wherein forming the first barrier member (94) from the first material (306) includes forming the first barrier member (94) from a different material than the second material.

3. The method of Claim 1, wherein forming the first barrier member (94) includes forming a sheet of the first material (306) into a shape defining the first compartment (100) and the second compartment (102).

4. The method of Claim 1, wherein providing the first compartment (100) with the first quantity of particulate matter (98) includes providing the first compartment (100) with a quantity of particulate matter (98) that is approximately the same as the second quantity of particulate matter (98); or wherein providing the first compartment (100) with the first quantity of particulate matter (98) includes providing the first compartment (100) with a quantity of particulate matter (98) that is different than the second quantity of particulate matter (98).

5. The method of Claim 1, wherein providing the first compartment (100) and the second compartment (102) with foam beads includes providing foam beads having approximately the same size and shape; or wherein providing the first compartment (100) and the second compartment (102) with foam beads includes providing foam beads having a different size and shape.

6. The method of Claim 1, wherein providing the first compartment (100) with the first quantity of particulate matter (98) and providing the second compartment (102) with the second quantity of particulate matter (98) occurs before or after the first compartment (100) and the second compartment (102) are covered by the second barrier member (96).

7. The method of any of the preceding claims, further comprising attaching the second barrier member (96) to the first barrier member (94),
preferably wherein attaching the second barrier member (96) to the first barrier member (94) includes attaching the second barrier member (96) to the first barrier member (94) at a first attachment location that surrounds the first compartment (100) and includes attaching the second barrier member (96) to the first barrier member (94) at a second attachment location that surrounds the second compartment (102), and/or
preferably wherein attaching the second barrier member (96) to the first barrier member (94) includes attaching the second barrier member (96) to the first barrier member (94) via an adhesive (106), more preferably via a hot melt adhesive.

8. The method of Claim 1, wherein forming the first barrier member (94) from the first material (306) includes
applying heat and a vacuum to a sheet of the first material (306); or
compression molding a sheet of the first material (306) within a die.

9. The method of Claim 1, wherein providing the first compartment (100) with the first quantity of particulate matter (98) and providing the second compartment (102) with the second quantity of particulate matter (98) includes injecting the first quantity of particulate matter (98) between the first barrier member (94) and the second barrier member (96) at a first port in fluid communication with the first compartment (100) and includes injecting the second quantity of particulate matter (98) between the first barrier member (94) and the second barrier member (96) at a second port in fluid communication with the second compartment (102),
preferably further comprising sealing the first port and the second port after injection of the first quantity of particulate matter (98) into the first compartment (100) and after injection of the second quantity of particulate matter (98) into the second compartment (102),
more preferably wherein sealing the first port and the second port includes attaching the first barrier member (94) to the second barrier member (96) using radio frequency (RF) welding.

10. The method of Claim 1, the method further comprising:
providing an outsole (34) and a cushioning member (36),wherein
(i) the midsole (32) further includes a first aperture (66) formed in a first surface (60) of the midsole (32) and in fluid communication with the first cavity (54), and a second aperture (68) formed in a second surface (64) of the midsole (32) and in fluid communication with the first cavity (54), the second surface (64) disposed on an opposite side of the midsole (32) than the first surface (60) and opposing the outsole (34); and
(ii) the cushioning member (36) includes the first compartment (100) containing the first quantity of particulate matter (98) and is positioned within the first cavity (54), the first quantity of particulate matter (98) being visible through the second aperture (68) at the outsole (34).

11. The method of Claim 10, further comprising providing the cushioning member (36) with the first barrier member (94) and the second barrier member (96), the first barrier member (94) and the second barrier member (96) cooperating to contain the first quantity of particulate matter (98) within the first compartment (100).

12. The method of any of Claims 1 to 3, 7 and 11, wherein forming the first barrier member (94) from the first material (306) includes forming the first barrier member (94) from a polymer, preferably from thermoplastic polyurethane (TPU).

13. The method of any of Claims 1 to 3, 7, 11 and 12, wherein forming the second barrier member (96) from the second material includes forming the second barrier member (96) from spandex.

14. The method of any of Claims 1 and 11, wherein forming the first barrier member (94) from the first material (306) and forming the second barrier member (96) from the second material includes forming one of the first material (306) and the second material, preferably the second material, from a permeable material and the other of the first material (306) and the second material, preferably the first material (306), from an impermeable material.

## Patentansprüche

1. Verfahren zum Herstellen einer Sohlenstruktur (14) für einen Schuhwerksartikel (10), wobei das Verfahren umfasst:
Bereitstellen einer Zwischensohle (32) mit einem ersten Hohlraum (54) und einem zweiten Hohlraum (56);
Ausbilden eines ersten Barriereglieds (94) aus einem ersten Material (306), wobei das erste Barriereglied (94) eine erste Kammer (100) und eine zweite Kammer (102) enthält;
Ausbilden eines zweiten Barriereglieds (96) aus einem zweiten Material;
Bereitstellen der ersten Kammer (100) mit einer ersten Menge an Teilchenmaterial (98);
Bereitstelen der zweiten Kammer (102) mit einer zweiten Menge an Teilchenmaterial (98);
Abdecken der ersten Kammer (100) mit dem zweiten Barriereglied (96);
Abdecken der zweiten Kammer (102) mit dem zweiten Barriereglied (96);
Positionieren der ersten Kammer (100) innerhalb des ersten Hohlraums (54); und
Positionieren der zweiten Kammer (102) innerhalb des zweiten Hohlraums (56),
wobei das Bereitstellen der ersten Kammer (100) mit der ersten Menge an Teilchenmaterial (98) und das Bereitstellen der zweiten Kammer (102) mit der zweiten Menge an Teilchenmaterial (98) ein Bereitstellen der ersten Kammer (100) und der zweiten Kammer (102) mit Schaumkügelchen beinhaltet.

2. Verfahren nach Anspruch 1, wobei das Ausbilden des ersten Barriereglieds (94) aus dem ersten Material (306) ein Ausbilden des ersten Barriereglieds (94) aus einem anderen Material als dem zweiten Material beinhaltet.

3. Verfahren nach Anspruch 1, wobei das Ausbilden des ersten Barriereglieds (94) ein Ausbilden einer Lage des ersten Materials (306) zu einer Form beinhaltet, welche die erste Kammer (100) und die zweite Kammer (102) definiert.

4. Verfahren nach Anspruch 1, wobei das Bereitstellen der ersten Kammer (100) mit der ersten Menge an Teilchenmaterial (98) ein Bereitstellen der ersten Kammer (100) mit einer Menge an Teilchenmaterial (98) beinhaltet, die ungefähr gleich der zweiten Menge an Teilchenmaterial (98) ist; oder wobei das Bereitstellen der ersten Kammer (100) mit der ersten Menge an Teilchenmaterial (98) ein Bereitstellen der ersten Kammer (100) mit einer Menge an Partikeln (98) beinhaltet, die sich von der zweiten Menge an Teilchenmaterial (98) unterscheidet.

5. Verfahren nach Anspruch 1, wobei das Bereitstellen der ersten Kammer (100) und der zweiten Kammer (102) mit Schaumkügelchen ein Bereitstellen von Schaumkügelchen mit ungefähr der gleichen Größe und Form beinhaltet; oder wobei das Bereitstellen der ersten Kammer (100) und der zweiten Kammer (102) mit Schaumkügelchen ein Bereitstellen von Schaumkügelchen mit unterschiedlicher Größe und Form beinhaltet.

6. Verfahren nach Anspruch 1, wobei das Bereitstellen der ersten Kammer (100) mit der ersten Menge an Teilchenmaterial (98) und das Bereitstellen der zweiten Kammer (102) mit der zweiten Menge an Teilchenmaterial (98) erfolgt, bevor oder nachdem die erste Kammer (100) und die zweite Kammer (102) durch das zweite Barriereglied (96) abgedeckt werden.

7. Verfahren nach einem der vorhergehenden Ansprüche, ferner umfassend ein Anbringen des zweiten Barriereglieds (96) an dem ersten Barriereglied (94), wobei vorzugsweise das Anbringen des zweiten Barriereglieds (96) an dem ersten Barriereglied (94) ein Anbringen des zweiten Barriereglieds (96) an dem ersten Barriereglied (94) an einer ersten Anbringungsstelle beinhaltet, welche die erste Kammer (100) umgibt, und ein Anbringen des zweiten Barriereglieds (96) an dem ersten Barriereglied (94) an einer zweiten Anbringungsstelle beinhaltet, welche die zweite Kammer (102) umgibt, und/oder wobei vorzugsweise das Anbringen des zweiten Barriereglieds (96) an dem ersten Barriereglied (94) ein Anbringen des zweiten Barriereglieds (96) an dem ersten Barriereglied (94) über einen Klebstoff (106), bevorzugter über einen Schmelzklebstoff beinhaltet.

8. Verfahren nach Anspruch 1, wobei das Ausbilden des ersten Barriereglieds (94) aus dem ersten Material (306) beinhaltet:
Anwenden von Wärme und eines Vakuums auf eine Lage aus dem ersten Material (306); oder
Formpressen einer Lage aus dem ersten Material (306) in einer Form.

9. Verfahren nach Anspruch 1, wobei das Bereitstellen der ersten Kammer (100) mit der ersten Menge an Teilchenmaterial (98) und das Bereitstellen der zweiten Kammer (102) mit der zweiten Menge an Teilchenmaterial (98) ein Einspritzen der ersten Menge an Teilchenmaterial (98) zwischen dem ersten Barriereglied (94) und dem zweiten Barriereglied (96) an einer ersten Öffnung in Fluidverbindung mit der ersten Kammer (100) beinhaltet und ein Einspritzen der zweiten Menge an Teilchenmaterial (98) zwischen dem ersten Barriereglied (94) und dem zweiten Barriereglied (96) an einer zweiten Öffnung in Fluidverbindung mit der zweiten Kammer (102) beinhaltet,
vorzugsweise ferner umfassend ein Abdichten bzw. Verschließen der ersten Öffnung und der zweiten Öffnung nach dem Einspritzen der ersten Menge an Teilchenmaterial (98) in die erste Kammer (100) und nach dem Einspritzen der zweiten Menge an Teilchenmaterial (98) in die zweite Kammer (102), wobei bevorzugter das Abdichten der ersten Öffnung und der zweiten Öffnungen ein Anbringen des ersten Barriereglieds (94) an dem zweiten Barriereglied (96) unter Verwendung von Hochfrequenz-(RF)-Schweißen beinhaltet.

10. Verfahren nach Anspruch 1, wobei das Verfahren ferner umfasst:
Bereitstellen einer Außensohle (34) und eines Polsterungs- bzw. Dämpfungsglieds (36), wobei
(i) die Zwischensohle (32) ferner eine erste Öffnung (66), die in einer ersten Fläche bzw. Oberfläche (60) der Zwischensohle (32) ausgebildet ist und in Fluidverbindung mit dem ersten Hohlraum (54) ist, und eine zweite Öffnung (68) enthält, die in einer zweiten Fläche bzw. Oberfläche (64) der Zwischensohle (32) ausgebildet ist und in Fluidverbindung mit dem ersten Hohlraum (54) ist, wobei die zweite Oberfläche (64) auf einer der ersten Oberfläche (60) gegenüberliegenden bzw. entgegengesetzten Seite der Zwischensohle (32) und gegenüberliegend bzw. entgegengesetzt zu der Außensohle (34) angeordnet ist; und
(ii) das Dämpfungsglied (36) die erste Kammer (100) enthält, welche die erste Menge an Teilchenmaterial (98) enthält, und innerhalb des ersten Hohlraums (54) positioniert ist, wobei die erste Menge an Teilchenmaterial (98) durch die zweite Öffnung (68) an der Außensohle (34) sichtbar ist.

11. Verfahren nach Anspruch 10, ferner umfassend ein Bereitstellen des Dämpfungsglieds (36) mit dem ersten Barriereglied (94) und dem zweiten Barriereglied (96), wobei das erste Barriereglied (94) und das zweite Barriereglied (96) dahingehend zusammenwirken, die erste Menge an Teilchenmaterial (98) innerhalb der ersten Kammer (100) zu enthalten.

12. Verfahren nach einem der Ansprüche 1 bis 3, 7 und 11, wobei das Ausbilden des ersten Barriereglieds (94) aus dem ersten Material (306) ein Ausbilden des ersten Barriereglieds (94) aus einem Polymer, vorzugsweise aus thermoplastischem Polyurethan (TPU) beinhaltet.

13. Verfahren nach einem der Ansprüche 1 bis 3, 7, 11 und 12, wobei das Ausbilden des zweiten Barriereglieds (96) aus dem zweiten Material ein Ausbilden des zweiten Barriereglieds (96) aus Spandex beinhaltet.

14. Verfahren nach einem der Ansprüche 1 und 11, wobei das Ausbilden des ersten Barriereglieds (94) aus dem ersten Material (306) und das Ausbilden des zweiten Barriereglieds (96) aus dem zweiten Material ein Ausbilden eines des ersten Materials (306) und des zweiten Materials, vorzugsweise des zweiten Materials, aus einem durchlässigen Material und das andere des ersten Materials (306) und des zweiten Materials, vorzugsweise des ersten Materials (306), aus einem undurchlässigen Material beinhaltet.

## Revendications

1. Procédé de fabrication d'une structure de semelle (14) pour un article chaussant (10), le procédé comprenant:
la mise à disposition d'une semelle intercalaire (32) présentant une première cavité (54) et une deuxième cavité (56) ;
la formation d'un premier élément de barrière (94) à partir d'une première matière (306), le premier élément de barrière (94) comprenant un premier compartiment (100) et un deuxième compartiment (102) ;
la formation d'un deuxième élément de barrière (96) à partir d'une deuxième matière ;
la mise à disposition au premier compartiment (100) d'une première quantité de matière particulaire (98) ;
la mise à disposition au deuxième compartiment (102) d'une deuxième quantité de matière particulaire (98) ;
le recouvrement du premier compartiment (100) avec le deuxième élément de barrière (96) ;
le recouvrement du deuxième compartiment (102) avec le deuxième élément de barrière (96) ;
le positionnement du premier compartiment (100) à l'intérieur de la première cavité (54) ; et
le positionnement du deuxième compartiment (102) à l'intérieur de la deuxième cavité (56),
dans lequel la mise à disposition au premier compartiment (100) d'une première quantité de matière particulaire (98) et la mise à disposition au deuxième compartiment (102) d'une deuxième quantité de matière particulaire (98) comprennent la mise à disposition au premier compartiment (100) et au deuxième compartiment (102) de sphères de mousse.

2. Procédé selon la revendication 1, dans lequel la formation du premier élément de barrière (94) à partir de la première matière (306) comprend la formation du premier élément de barrière (94) à partir d'une autre matière que la deuxième matière.

3. Procédé selon la revendication 1, dans lequel la formation du premier élément de barrière (94) comprend la formation d'une feuille de la première matière (306) en une forme définissant le premier compartiment (100) et le deuxième compartiment (102).

4. Procédé selon la revendication 1, dans lequel la mise à disposition au premier compartiment (100) de la première quantité de matière particulaire (98) comprend la mise à disposition au premier compartiment (100) d'une quantité de matière particulaire (98) qui est à peu près la même que la deuxième quantité de matière particulaire (98) ; ou dans lequel la mise à disposition au premier compartiment (100) de la première quantité de matière particulaire (98) comprend la mise à disposition au premier compartiment (100) d'une quantité de matière particulaire (98) qui est différente de la deuxième quantité de matière particulaire (98).

5. Procédé selon la revendication 1, dans lequel la mise à disposition au premier compartiment (100) et au deuxième compartiment (102) de sphères de mousse comprend la mise à disposition de sphères de mousse présentant à peu près les mêmes dimension et forme ; ou dans lequel la mise à disposition au premier compartiment (100) et au deuxième compartiment (102) de sphères de mousse comprend la mise à disposition de sphères de mousse présentant des dimension et forme différentes.

6. Procédé selon la revendication 1, dans lequel la mise à disposition au premier compartiment (100) de la première quantité de matière particulaire (98) et la mise à disposition au deuxième compartiment (102) de la deuxième quantité de matière particulaire (98) se produit avant ou après que le premier compartiment (100) et que le deuxième compartiment (102) ont été recouverts par le deuxième élément de barrière (96).

7. Procédé selon les quelconques revendications précédentes, comprenant en outre la fixation du deuxième élément de barrière (96) au premier élément de barrière (94), de préférence dans lequel la fixation du deuxième élément de barrière (96) au premier élément de barrière (94) comprend la fixation du deuxième élément de barrière (96) au premier élément de barrière (94) à un premier point de fixation qui entoure le premier compartiment (100) et comprend la fixation du deuxième élément de barrière (96) au premier élément de barrière (94) à un deuxième point de fixation qui entoure le deuxième compartiment (102) et/ou
de préférence dans lequel la fixation du deuxième élément de barrière (96) au premier élément de barrière (94) comprend la fixation du deuxième élément de barrière (96) au premier élément de barrière (94) par le biais d'un adhésif (106), plus préférablement par le biais d'un adhésif thermofusible.

8. Procédé selon la revendication 1, dans lequel la formation du premier élément de barrière (94) de la première matière (306) comprend
l'application de chaleur et d'un vide à une feuille de la première matière (306) ; ou
le moulage par compression d'une feuille de la première matière (306) à l'intérieur d'une matrice.

9. Procédé selon la revendication 1, dans lequel la mise à disposition au premier compartiment (100) de la première quantité de matière particulaire (98) et la mise à disposition au deuxième compartiment (102) de la deuxième quantité de matière particulaire (98) comprend l'injection de la première quantité de matière particulaire (98) entre le premier élément de barrière (94) et le deuxième élément de barrière (96) à un premier passage en communication fluidique avec le premier compartiment (100) et comprend l'injection de la deuxième quantité de matière particulaire (98) entre le premier élément de barrière (94) et le deuxième élément de barrière (96) à un deuxième passage en communication fluidique avec le deuxième compartiment (102),
de préférence comprenant en outre le scellement du premier passage et du deuxième passage après l'injection de la première quantité de matière particulaire (98) dans le premier compartiment (100) et après l'injection de la deuxième quantité de matière particulaire (98) dans le deuxième compartiment (102), plus préférablement dans lequel le scellement du premier passage et du deuxième passage comprend la fixation du premier élément de barrière (94) au deuxième élément de barrière (96) en utilisant un soudage par fréquence radio (RF).

10. Procédé selon la revendication 1, le procédé comprenant en outre :
la mise à disposition d'un dessous de semelle (34) et d'un élément de rembourrage (36), dans lequel
(i) la semelle intercalaire (32) comprend en outre une première ouverture (66) pratiquée dans une première surface (60) de la semelle intercalaire (32) et en communication fluidique avec la première cavité (54) et une deuxième ouverture (68) pratiquée dans la deuxième surface (64) de la semelle intercalaire (32) et en communication fluidique avec la première cavité (54), la deuxième surface (64) étant disposée sur un côté de la semelle intercalaire (32) face à la première surface (60) et face au dessous de semelle (34) ; et
(ii) l'élément de rembourrage (36) comprend le premier compartiment (100) contenant la première quantité de matière particulaire (98) et est positionné à l'intérieur de la première cavité (54), la première quantité de matière particulaire (98) étant visible à travers la deuxième ouverture (68) sur le dessous de semelle (34).

11. Procédé selon la revendication 10, comprenant en outre la mise à disposition à l'élément de rembourrage (36) du premier élément de barrière (94) et du deuxième élément de barrière (96), le premier élément de barrière (94) et le deuxième élément de barrière (96) coopérant pour contenir la première quantité de matière particulaire (98) à l'intérieur du premier compartiment (100).

12. Procédé selon les quelconques revendications 1 à 3, 7 et 11, dans lequel la formation du premier élément de barrière (94) de la première matière (306) comprend la formation du premier élément de barrière (94) à partir d'un polymère, de préférence à partir de polyuréthane thermoplastique (TPU).

13. Procédé selon les quelconques revendications 1 à 3, 7, 11 et 12, dans lequel la formation du deuxième élément de barrière (96) à partir de la deuxième matière comprend la formation du deuxième élément de barrière (96) à partir de spandex.

14. Procédé selon les quelconques revendications 1 et 11, dans lequel la formation du premier élément de barrière (94) à partir de la première matière (306) et la formation du deuxième élément de barrière (96) à partir de la deuxième matière comprennent la formation de l'une de la première matière (306) et de la deuxième matière, de préférence de la deuxième matière, à partir d'une matière perméable et l'autre de la première matière (306) et de la deuxième matière, de préférence la première matière (306), à partir d'une matière imperméable.
